# EUROPEAN PATENT APPLICATION

(11) **EP 3 564 200 A1**
(43) Date of publication of application: **06.11.2019**
(21) Application number: 19171590.3
(22) Date of filing: 29.04.2019
(51) Int. Cl.: C04B 33/34, C04B 41/00, C04B 41/45, C04B 41/83, C09D 5/36, C09D 183/04, C23C 26/00, C03C 17/00, C04B 111/82, C09C 1/00

(54) **CERAMIC COLOURS**

(30) Priority: 04.05.2018 SG 10201803806
(71) Applicant: Merck Patent GmbH, 64293 Darmstadt (DE)
(72) Inventor: Hamm, Lukas, 64853 OTZBERG (DE); Handrosch, Carsten, 64372 OBER-RAMSTADT (DE); Hunger, Marc, 68519 VIERNHEIM (DE); Kersten, Jens, 64686 LAUTERTAL (DE); Platzer, Cairon, 64291 DARMSTADT (DE); Thong, Markus, 64653 LORSCH (DE); Lim, Khwan, SINGAPORE 279712 (SG)

(57) **Abstract**

The invention relates to ceramic colours comprising effect pigments and a silicon comprising polymer for decoration of metallic, ceramic and glassy articles and to a process for the preparation of a ceramic glaze.

## Description

The invention relates to ceramic colours comprising effect pigments and a silicon comprising polymer for decoration of metallic, ceramic and glassy articles and to a process for the preparation of a ceramic glaze.

In general, decorative applications in ceramic glazes use mixtures of pigments, for example effect pigments, and ceramic frits/frit mixtures. The firing temperature and the composition of the frit are determined by the article to be coated. Typical firing temperature ranges for different applications are for example:
enamel at 500 - 850 °C,
glass at 550 - 650 °C,
triple-fired crockery at 740 - 900 °C,
triple-fired tiles at 900 - 1150 °C,
single-fired crockery at 1000 - 1300 °C,
single-fired tiles at 1100 - 1250 °C.

The temperature of the firing process has to be sufficiently high for the respective application to ensure that abrasion-resistant and closed coatings are made from the ceramic colour. The firing temperature is oriented towards the softening or melting temperature of the respective glass frit. The glass particles being present at the beginning soften then and form a continuous matrix and a smooth surface. Here the problem occurs that the pigments, in particular the representatives from the class of the pearlescent pigments, generally do not survive the aggressive conditions consisting of oxidic melt (frit components) and high temperatures during the firing process without damage.

It is known from the prior art that a significant loss in tinting strength and pearlescent effect must be expected on use of pearlescent pigments in ceramic or glassy coatings.

In order to prevent this, these pigments must either be encapsulated in additional protective layers, or alternatively the use of pearlescent pigments in this high-temperature area of application is limited to special combinations of pearlescent pigments and modified engobes or fluxes.

Efforts have therefore been made in the past to optimise the pearlescent effect in decorative applications on ceramic articles by application-technical modifications, e.g. varying particle form and size of frit particles, varying the chemical composition of frit particles or enhancing pigment concentration. Furthermore, efforts have been made to stabilise the effect pigments, in particular pearlescent pigments, by sheathing with insulating protective layers for such thermally and chemically extremely highly demanding applications of this type.

This is described in EP 3 159 380 A1, EP 220 509 A1, EP 307 771 A1, EP 307 771 A1, DE 39 32 424 C1, GB 2 096 592 A, US Patent 5,783,506, US 4,353,991, EP 0 419 843 A1, CN 101462895A, and DE 198 59 420 A1.

These solutions known from the prior art, such as, for example, the encapsulation of the pigments, are complex in production, since a further process step for application of the protective layer must be carried out in production. In addition, disadvantageous effects, such as, for example, clouding of the glaze and colour changes in the pigment or poorer control of the colour effect in the application medium, may occur, depending on the composition of the protective layer.

The second approach by application-technical modifications such as pigment concentration, composition and form of frit particles always require a sufficiently high temperature to ensure film formation of the ceramic colour. A smooth and mechanically stable layer can be insured by a high alkali concentration of the frit or by a sufficiently high temperature. Both variants might negatively influence the effect pigment, tending to decompose under such harsh conditions.

The coating of metallic, glass and other surfaces at low temperatures with mixtures comprising silicon comprising polymers for the preparation of scratch-resistant layers are described in the following patent applications: WO 2010099520, WO 20081368610A1, WO 2014086619, WO 2013170124, CN 103725074, WO 2011085995, US 9701576 B2, WO 2013156617, KR 2017044000, CN 105820599, CN 104403382, KR 1405322, CN 103788733, JP 2010009958, US 20170212548, CN 1560157, US 6436543, KR 2016100783, CN 102863856, KR 2010124920, JP 04080275 and DE 1230154.

Although several methods and mixtures are known in the state of the art, none of them serves all needs for forming ceramic glazes on ceramic, metallic or glasslike bodies like tiles or porcelain, especially not at firing temperatures between 700°C and 1300°C respectively on metallic bodies like enamel at firing temperatures between 450°C and 850°C.

It was therefore the object of the present invention to provide a process for the preparation of ceramic glazes and to develop a ceramic colour containing pearlescent pigments which do not show the disadvantages of state of the art methods and compositions.

Surprisingly, it has now been found that by use of a ceramic colour comprising effect pigments and a silicon comprising polymer in a process according to the invention disadvantages of the combination of a particulate frit and pearlescent pigments can be avoided.

The invention therefore relates to a process for the preparation of a ceramic glaze and glazed articles comprising the following steps:
(a) preparing a ceramic colour by mixing at least one effect pigment based on flake-form substrates and/or uncoated flake-form substrates with a refractive index R.I. > 1.5, at least one silicon comprising polymer, optionally a solvent, optionally a binder, optionally an absorptive ceramic pigment, and optionally at least one additive,
(b) printing or coating the ceramic colour obtained in step (a) on a ceramic or metallic body,
(c) drying the ceramic or metallic body obtained in step (b),
(d) firing the ceramic or metallic body obtained in step (c) at a temperature in the range of 450°C - 1300°C.

The present invention preferably relates to a process for the preparation of a ceramic glaze and glazed articles wherein a ceramic colour comprising at least one effect pigment based on flake-form substrates and/or uncoated flake-form substrates with a refractive index >1.5 and at least one silicon comprising polymer, and optionally a solvent, optionally a binder, optionally an absorptive ceramic pigment and optionally at least one additive is applied to a ceramic article and fired at a temperature ≥700°C respectively on a metallic body at a temperature ≥450°C, preferably ≥500°C.

In ceramic colours according to the invention, effect pigments based on flake-form substrates as well as uncoated flake-form substrates with a refractive index >1.5 may be used alone or in combination with each other. Preferably, effect pigments based on flake-form substrates are used.

The present invention also relates to a ceramic colour comprising at least one silicon comprising polymer and at least one effect pigment based on flake-form substrates. The substrates may be selected from flake-form substrates like e.g. synthetic mica flakes, natural mica flakes, glassflakes and silica flakes. Preferably the effect pigments are based on high-temperature-resistant flakes, such as, for example, Al₂O₃ flakes, SiC flakes, SiₓN_{y}C_{z} flakes (with x = 0.5-1.0; y = 0.25-0.5; z = 0.25-0.5), B₄C flakes, BN flakes, graphite flakes, TiO₂ flakes, and Fe₂O₃ flakes, especially Al₂O₃ flakes, SiC flakes, B₄C flakes, BN flakes, graphite flakes, TiO₂ flakes, and Fe₂O₃ flakes. Preferably, the proportion of effect pigment in the ceramic colour is at least 0.1% by weight based on the silicon comprising polymer.

Flake-form substrates with refractive index R.I. larger than that of the applied ceramic glaze (approx. > 1.5) can also be used or added in pure form (without any coating). In this case an attractive sparkle effect can be obtained. Preferably, uncoated flake-form substrates with R.I. > 1.5 selected from the group consisting of Al₂O₃ flake, SiC flakes, SiₓN_{y}C_{z} flakes (with x = 0.5-1.0; y = 0.25-0.5; z = 0.25-0.5), B₄C flakes, BN flakes, graphite flakes, TiO₂ flakes, and Fe₂O₃ flakes are used, especially Al₂O₃ flake, SiC flakes, B₄C flakes, BN flakes, graphite flakes, TiO₂ flakes, and Fe₂O₃ flakes. The proportion of uncoated flake-form substrates in the ceramic colour may be at least 0.1% by weight based on the silicon comprising polymer.

Surprisingly, the ceramic colours and the process according to the invention are suitable for the decoration of ceramic articles like tiles or porcelain at temperatures in the range of 700°C - 1300°C, preferably 720°C - 1150°C, in particular 740°C - 900°C. The ceramic colours and the process according to the invention are also suitable for the decoration of metallic articles like enamel at temperatures in the range of 450°C - 950°C, preferably 500°C - 900°C, in particular 550°C - 850°C.

It is an advantage of the present invention that the loss of pearlescent effect and tinting strength can be reduced. Preferably, a considerably strong pearlescent effect and a higher tinting strength can be achieved compared to methods of the state of the art. Also, a glaze with a smooth surface can be obtained.

Ceramic articles comprising a glaze made according to the invention can preferably provide the advantage that the desired optical effects are stable and accessible in a reproducible manner in high-temperature applications up to 1100°C.

The silicon comprising polymer is preferably selected from polysiloxanes, polysilazanes (perhydropolysilazanes as well as organopolysilazanes), polysilsesquioxanes, polycarbosilanes, polycarbosiloxanes, polysilanes, polysilylcarbodiimides, polysilsesquicarbodiimides, polysilsesquiazanes, polyborosilanes, polyborosilazanes, polyborosiloxanes, polyborosilsesquioxanes, polysilazane/polysiloxane block copolymers, and polysiloxazanes. Mixtures of silicon comprising polymers may also be used.

The selection of polymer/s depends on the requirements specification of the ceramic film and the firing temperature necessary for the article to be coated. The skilled man in the art can chose suitable polymers, since the temperature at which the silicon comprising polymer forms a glassy structure depends on the chemical composition and the molecular weight of the polymer.

Preferred polymers are for example polysiloxanes, polysilsequioxanes, polyborosiloxanes and polysilazanes, in particular polysilazanes, polysiloxanes and/or polysilsequioxanes, wherein each of polysilazanes, polysiloxanes, and polysilsequioxanes separately represent preferred embodiments of the invention.

In particular polysilsesquioxane polymers of the following formula can be used: 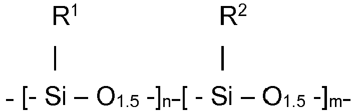 whereas
R¹ and R² are radicals equal or different from each other and are selected from the group consisting of hydrogen, alkyl, alkene, cycloalkyl, aryl, arylene and alkoxyl, and
m and n are, independently from each other, an integer selected from the numbers in the range of from 1 to 100,
with the proviso that the boiling point of each of the materials is exceeding 150° C.

Especially, methyl-phenyl polysilsesquioxanes are advantageous for the invention.

In particular polysilazanes of Formula (1) can be used:

-(SiR'R"-NR"')ₙ- Formula (1)

where R', R", and R"' are alike or different and independently of one another are hydrogen or an unsubstituted or substituted alkyl, aryl, vinyl or (trialkoxysilyl)alkyl radical, n being an integer and n having a magnitude such that the polysilazane has a number average molecular weight of 150 to 150 000 g/mol.

In a preferred embodiment, the polysilazanes used are polysilazanes of Formula (1) in which R', R", and R"' independently of one another are a radical from the group of hydrogen, methyl, ethyl, propyl, isopropyl, butyl, isobutyl, tert-butyl, phenyl, tolyl, vinyl or 3-(triethoxysilyl)propyl, 3-(trimethoxysilylpropyl).

In another preferred embodiment preferred polysilazanes according to Formula (2) can be used:

-(SiR'R"-NR"')ₙ-(SiR*R**-NR***)ₚ- Formula (2)

where R', R", R"', R*, R**, and R*** independently of one another are hydrogen or an unsubstituted or substituted alkyl, aryl, vinyl or (trialkoxysilyl)-alkyl radical, n and p having dimensions such that the polysilazane has a number average molecular weight of 150 to 150 000 g/mol.

More particularly preferred are compounds in which R', R"' and R*** are hydrogen and R", R* and R** are methyl; or R', R"' and R*** are hydrogen and R" and R* are methyl and R**is vinyl; or R', R"', R* and R*** are hydrogen and R" and R** are methyl.

Likewise preferred for use are polysilazanes of the Formula (3):

-(SiR'R"-NR"')ₙ-(SiR*R**-NR***)ₚ-(SiR'R²-NR³)_{q}- Formula (3)

where R', R", R"', R*, R**, R'***, R¹, R², and R³ independently of one another are hydrogen or an unsubstituted or substituted alkyl, aryl, vinyl or (trialkoxysilyl)alkyl radical, n, p, and q having dimensions such that the polysilazane has a number average molecular weight of 150 to 150 000 g/mol.

More particularly preferred are polysilazanes in which R', R"' and R*** are hydrogen and R", R*, R** and R² are methyl, R³ is (triethoxysilyl)propyl and R¹ is alkyl or hydrogen.

In addition to the silicon comprising polymers metal alkoxides of formula M(OR)ₓ may be used in order to change the finally forming glass composition. Alkoxides of metals of the second and third main group as well as of transition metals, especially of Zr, Zn, Ca, Mg and Al, are preferred.

Additionally, the ceramic colour may comprise binders, for example silicon containing resins. Commercial resins are for example available by Wacker under the tradename Silres or by Arkema under the tradename Synolac. However, the selection of binder is generally not limited to silicon containing resins. As long as compatibility is given all kind of organic binders can be used, like e.g. polyester, polyurethane, epoxy, alkyd, acrylate etc.

Besides these components, the ceramic color may comprise further fillers, additives (e.g. dispersing additives, rheology additives, thickener, defoamer), solvents such as screen printing oils or ceramic absorptive pigments like e.g. green chromium-oxide pigments, black spinel pigments, buff-rutile-pigments, cadmium red and yellow, cobalt-blue pigments, commercially available by Shepperd or Ferro. Additives are available by BYK or other manufacturer. Examples for possible additives are: Aerosil, Byk 405, Byk 410, Mowital B 30 H (Kuraray), Crayvallac PA3 BA 20 (Arkema), Byk 065, Koralision Entschäumer FG 100, TEGO Dispers 652.

For the preparation of fine colour grids and relief-like prints on ceramic substrates by means of ceramic colours, use is made of screen printing oils, which prevent running of the colour pastes after printing and give rise to prints with sharp contours. Furthermore, screen printing oils ensure suitability of the ceramic colour for application on transfer printing paper. An Example for screening printing oil are the commercially available 221-ME und Screenprint Bulk 803035 MR by Ferro.

The proportion of effect pigment in the ceramic colour is preferably at least 0.1%, especially 0.1 - 99.9%, by weight based on the silicon comprising polymer. Further preferred ranges may be 0.1 - 98%, 0.5 - 95%, and 1 - 91% by weight based on the silicon comprising polymer.
Especially in these embodiments of the invention, the silicon comprising polymer is preferably a polysilazane, a polysiloxane and/or a polysilsesquioxanes, wherein each of polysilazanes, polysiloxanes, and polysilsequioxanes separately represent preferred embodiments of the invention, in particular polysilsesquioxanes,

The proportion of uncoated flake-form substrates in the ceramic colour may be the same as for the effect pigments.

Preferably, ceramic colours according to the invention comprise 0.1 - 99.9 % by weight of at least one effect pigment and/or at least one uncoated flake-form substrate, 0.1 - 99.9 % by weight of at least one silicon comprising polymer (preceramic polymer), 0 - 50 % by weight of at least one solvent, 0 - 90 % by weight of at least one binder, 0 - 20 % by weight of at least one additive, where percentages are based on the weight of the ceramic colour and add to 100%.

The temperature at which a closed and mechanically stable glassy film on the work piece is formed, lies preferably below the temperature that is necessary for usual methods by glass frits. Since in the process according to the invention the glass layer forms during the firing process and a temperature near the melting point of the glass can be avoided, there is no danger that the pigment decomposes at high temperatures in the oxidic melt and the pearlescent effect is lost.

Furthermore, this route helps to avoid aggressive and counterproductive alkali glass components. A certain amount of alkali is necessary for the state of the art methods to adopt the glass melting point to the respective temperature window of the firing process of the workpiece to be coated.

This limitation does not exist for the ceramic colour according to the invention. Advantageously the temperature window can be defined by the choice of the silicon comprising polymer and a high chromatic pearlescent effect can be achieved at every firing temperature.

All known effect pigments are suitable for the invention, in particular pearlescent pigments. The effect pigments may preferably be based on substrates selected from synthetic mica flakes, natural mica flakes and very particularly preferably based on high-temperature-resistant flakes, such as, for example, Al₂O₃ flakes, SiC flakes, B₄C flakes, BN flakes, graphite flakes, TiO₂ flakes, and Fe₂O₃ flakes, especially Al₂O₃ flakes.

Finally, particularly high temperature stability is generally achieved if use is made of pearlescent pigments based on flake-form substrates which are stable at high temperatures. Examples which may be mentioned here are: corundum - Al₂O₃, carborundum - SiC, boron nitride - BN, graphite and haematite - Fe₂O₃.

It is also possible to employ mixtures of different substrates or mixtures of the same substrates having different particle sizes. The substrates can be mixed with one another in any weight ratio. 10 : 1 to 1 : 10 mixtures are preferably employed, in particular 1 : 1 mixtures. Particular preference is given to substrate mixtures consisting of substrate flakes having different particle sizes, in particular mixtures of S fraction (10-200 µm), N fraction (10 - 60 µm) and F fraction (5 - 25 µm), but also of F fraction (5 - 25 µm) and M fraction (1 - 15 µm).

The size of the base substrates is not crucial per se and can be matched to the particular application and desired target effect/target texture: for example, satin or highly glittering.

In general, the flake-form substrates have a thickness of 0.05 - 5 µm, preferably 0.1 - 2 µm, in particular 0.1 - 1 µm. The size in the two other dimensions is usually 1 - 500 µm, preferably 1 - 250 µm and in particular 1 - 60 µm.

Uncoated flake-form substrates may be used in the ceramic colour according to the invention in same or similar embodiments like substrates used for the effect pigments.

The thickness of at least one individual layer on the base substrate of the pearlescent pigment is essential for the optical properties of the pigment, as already described in numerous patents and patent applications, for example in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 or also in further patent documents and other publications known to the person skilled in the art.

The pigment must have at least one optically active layer, preferably a high-refractive-index layer (for example TiO₂, Fe₂O₃, SnO₂, etc.). High-refractive-index layers here are taken to mean all layers which have a refractive index of n ≥ 1.8, preferably of n ≥ 2.0.

Suitable substrate flakes for the pearlescent pigments may be doped or undoped. If they are doped, the doping is preferably Al, N, B, Ti, Zr, Si, In, Sn or Zn or mixtures thereof. Furthermore, further ions from the group of the transition metals (V, Cr, Mn, Fe, Co, Ni, Cu, Y, Nb, Mo, Hf, Ta, W) and ions from the group of the lanthanides may serve as dopants.

In the case of Al₂O₃, the substrate is preferably undoped or doped with TiO₂, ZrO₂ or ZnO. The Al₂O₃ flakes are preferably corundum. Suitable Al₂O₃ flakes are preferably doped or undoped α-Al₂O₃ flakes, in particular TiO₂-doped α-Al₂O₃ flakes. If the substrate is doped, the proportion of the doping is preferably 0.01 - 5.00% by weight, in particular 0.10 - 3.00% by weight, based on the substrate.

Suitable Al₂O₃ flakes have an equivalence diameter distribution according to which 90% of the particles are in the range 5-45 µm, preferably 5-40 µm.

The D₅₀ values of the Al₂O₃ flakes are preferably in the range 15-30 µm, very particularly preferably in the range from 15-25 µm.

The D₁₀ values are preferably in the range 5-15 µm, very particularly preferably in the range 6-10 µm.

Throughout the application, the D₁₀, D₅₀ and D₉₀ values are determined using a Malvern MS 2000.

The thickness of the Al₂O₃ flakes is preferably 50-1200 nm preferably 150-800 nm and in particular 200-450 nm.

In a very particularly preferred embodiment, the thickness of the Al₂O₃ flakes is < 500 nm, preferably 150-450 nm and in particular 150-400 nm.

The aspect ratio (diameter/thickness ratio) of the Al₂O₃ flakes is preferably 10-1000, in particular 50-500.

In a further preferred embodiment, the aspect ratio of the Al₂O₃ flakes is 30-200, in particular 50-150.

In a preferred embodiment, the flake-form substrate is coated with one or more transparent, semi-transparent and/or opaque layers comprising metal oxides, metal oxide hydrates, metal silicates, metal suboxides, metals, metal fluorides, metal nitrides, metal oxynitrides or mixtures of these materials. The metal oxide, metal oxide hydrate, metal silicate, metal suboxide, metal, metal fluoride, metal nitride or metal oxynitride layers or the mixtures thereof can have a low refractive index (refractive index < 1.8) or a high refractive index (refractive index ≥ 1.8). Suitable metal oxides and metal oxide hydrates are all metal oxides or metal oxide hydrates known to the person skilled in the art, such as, for example, aluminium oxide, aluminium oxide hydrate, silicon oxide, silicon oxide hydrate, iron oxide, tin oxide, cerium oxide, zinc oxide, zirconium oxide, chromium oxide, zirconium silicate ZrSiO₄, mullite, titanium oxide, in particular titanium dioxide, titanium oxide hydrate and mixtures thereof, such as, for example, ilmenite or pseudobrookite. Metal suboxides which can be employed are, for example, the titanium suboxides (for example Ti₂O₃ or γ-Ti₃O₅). Suitable metal silicates are aluminium silicate, Mg silicate, C silicate or Ba silicate; mixed alkaline-earth metal silicates, such as, for example, Ca/Mg silicate, Zr silicate or mixtures of the said silicates. Suitable metals are, for example, chromium, aluminium, nickel, silver, gold, titanium, copper or alloys, and a suitable metal fluoride is, for example, magnesium fluoride. Metal nitrides or metal oxynitrides which can be employed are, for example, the nitrides or oxynitrides of the metals titanium, zirconium and/or tantalum. Metal oxide, metal, metal fluoride and/or metal oxide hydrate layers and very particularly preferably metal oxide and/or metal oxide hydrate layers are preferably applied to the support. Furthermore, multilayered structures comprising high- and low-refractive-index metal oxide, metal oxide hydrate, metal or metal fluoride layers may also be present, with high- and low-refractive-index layers preferably alternating. Particular preference is given to layer packages comprising a high-refractive-index layer and a low-refractive-index layer, where one or more of these layer packages may be applied to the support. The sequence of the high- and low-refractive-index layers here can be matched to the support in order to incorporate the support into the multilayered structure. In a further embodiment, the metal oxide, metal silicate, metal oxide hydrate, metal suboxide, metal, metal fluoride, metal nitride or metal oxynitride layers may be mixed or doped with colorants or other elements. Suitable colorants or other elements are, for example, inorganic coloured pigments, such as coloured metal oxides, for example magnetite, chromium(III) oxide or coloured pigments, such as, for example, Thenard's Blue (a Co/Al spinel) or elements, such as, for example, yttrium or antimony, and generally pigments from the structural class of the perovskites, pyrochlores, rutiles and spinels. Pearlescent pigments comprising these layers exhibit great colour variety with respect to their mass tone and may in many cases exhibit an angle-dependent change in colour (colour flop) due to interference.

In a preferred embodiment, the outer layer on the support is a high-refractive-index metal oxide. This outer layer may additionally be on the above-mentioned layer packages or, in the case of high-refractive-index supports, may be part of a layer package and consist, for example, of TiO₂, titanium suboxides, Fe₂O₃, SnO₂, ZnO, ZrO₂, Ce₂O₃, CoO, Co₃O₄, V₂O₅, Cr₂O₃ and/or mixtures thereof, such as, for example, ilmenite or pseudobrookite.

The thickness of the metal oxide, metal oxide hydrate, metal silicate, metal suboxide, metal, metal fluoride, metal nitride or metal oxynitride layers or a mixture thereof is usually 3 to 300 nm and, in the case of the metal oxide, metal oxide hydrate, metal suboxide, metal fluoride, metal nitride or metal oxynitride layers or a mixture thereof, preferably 20 to 200 nm. The thickness of the metal layers is preferably 4 to 50 nm.

The optical layer preferably consists of TiO₂, ZrO₂, Fe₂O₃, Fe₃O₄, SnO₂, ZnO, or mixtures or combinations thereof. The layer may be undoped or doped. Suitable dopants are, for example, alkaline-earth metals or compounds thereof, in particular calcium and magnesium. The doping proportion is generally a maximum of 5% by weight, based on the respective layer.

The optical layer is particularly preferably a TiO₂ layer, an Fe₂O₃ layer, a TiO₂/Fe₂O₃ mixed layer, a pseudobrookite layer (Fe₂TiO₅) or a combination of these layers in a multilayered system, such as, for example, TiO₂ - SiO₂ - TiO₂ or Fe₂O₃ - SiO₂ - Fe₂O₃.

The titanium dioxide may be present in the high-refractive-index coating in the rutile or anatase modification, preferably in the form of rutile. The processes for the preparation of rutile are described, for example, in the prior art in U.S. 5,433,779, U.S. 4,038,099, U.S. 6,626,989, DE 25 22 572 C2 and EP 0 271 767 B1. A thin tin oxide layer (< 10 nm), which serves as additive in order to convert the TiO₂ into rutile, is preferably applied to the substrate flakes before the TiO₂ precipitation.

The thickness of the optically active layer is preferably in each case 30 to 350 nm, in particular 50 to 250 nm.

Pearlescent pigments based on flake-form substrates which are particularly preferred for the ceramic colour according to the invention are indicated below:
substrate flake + TiO₂
substrate flake + Fe₂O₃
substrate flake + Fe₃O₄
substrate flake + TiO₂/Fe₂O₃
substrate flake + FeTiO₃
substrate flake + Fe₂TiO₅
substrate flake + ZrO₂
substrate flake + ZnO
substrate flake + SnO₂
substrate flake + Cr₂O₃
substrate flake + Ce₂O₃
substrate flake + TiOₓ (reduced), where x = 1.50 - 1.95
substrate flake + TiO₂ + Fe₂O₃
substrate flake + TiO₂ + Fe₃O₄
substrate flake + Fe₂O₃ + TiO₂
substrate flake + TiO₂ + SiO₂ + TiO₂
substrate flake + TiO₂ + SnO₂ + TiO₂
substrate flake + TiO₂ + Al₂O₃ + TiO₂
substrate flake + Fe₂O₃ + SiO₂ + TiO₂
substrate flake + TiO₂/Fe₂O₃ + SiO₂ + TiO₂
substrate flake + TiO₂/Fe₂O₃ + SiO₂ + TiO₂/Fe₂O₃
substrate flake + TiO₂/Fe₂O₃ + SiO₂ + TiO₂ + TiO₂/Fe₂O₃
substrate flake + TiO₂ + SiO₂ + TiO₂/Fe₂O₃
substrate flake + TiO₂ + SiO₂
substrate flake + TiO₂ + Al₂O₃
substrate flake + TiO₂ + MgO x SiO₂ + TiO₂
substrate flake + Fe₂O₃ + MgO x SiO₂ + TiO₂
substrate flake + TiO₂/Fe₂O₃ + MgO x SiO₂ + TiO₂
substrate flake + TiO₂/Fe₂O₃ + MgO x SiO₂ + TiO₂/Fe₂O₃
substrate flake + TiO₂/Fe₂O₃ + MgO x SiO₂ + TiO₂ + TiO₂/Fe₂O₃
substrate flake + TiO₂ + MgO x SiO₂ + TiO₂/Fe₂O₃
substrate flake + SnO₂ + TiO₂ + SiO₂ + SnO₂ + TiO₂
substrate flake + SnO₂ + TiO₂ + SnO₂ + TiO₂
substrate flake + SnO₂ + TiO₂ + Fe₂O₃ + SiO₂ + SnO₂ + TiO₂ + Fe₂O₃
substrate flake + Fe₂O₃ + SnO₂ + TiO₂
substrate flake + Fe₂O₃ + SnO₂ + Fe₂O₃
substrate flake + TiO₂ + SnO₂ + TiO₂
substrate flake + TiO₂/Fe₂O₃ + SnO₂ + TiO₂
substrate flake + TiO₂/Fe₂O₃ + SnO₂ + TiO₂/Fe₂O₃
substrate flake + SnO₂ + TiO₂ + Fe₂O₃ + SnO₂ + TiO₂ + Fe₂O₃
substrate flake + Fe₂TiO₅ + SnO₂ + Fe₂TiO₅
substrate flake + Fe₂TiO₅ + SiO₂ + Fe₂TiO₅

In a further preferred embodiment, a first low-refractive-index layer is firstly applied to the substrate flake. Low-refractive-index layer in this application is taken to mean a layer which has a refractive index of < 1.8.

The low-refractive-index layer on the substrate is preferably selected from the group Al₂O₃, SiO₂, zirconium silicate ZrSiO₄, mullite 3Al₂O₃ x 2SiO₂ or 2Al₂O₃ x SiO₂ (sintered or fused mullite) or alkaline-earth metal silicate (MSiO₃ where M = Mg²⁺, Ca²⁺, Sr²⁺ or Ba²⁺, or M₂Si₃O₈, where M = Mg²⁺, Ca²⁺, Sr²⁺ or Ba²⁺).

Preferred pigments having a low-refractive-index layer (LRL) on the substrate surface are distinguished by the following structure:
substrate flake + LRL + TiO₂
substrate flake + LRL + Fe₂O₃
substrate flake + LRL + Fe₃O₄
substrate flake + LRL + TiO₂/Fe₂O₃
substrate flake + LRL + FeTiO₃
substrate flake + LRL + Fe₂TiO₅
substrate flake + LRL + ZrO₂
substrate flake + LRL + ZnO
substrate flake + LRL + SnO₂
substrate flake + LRL + Cr₂O₃
substrate flake + LRL + Ce₂O₃
substrate flake + LRL + TiOₓ (reduced), where x = 1.50 - 1.95
substrate flake + LRL + TiO₂ + Fe₂O₃
substrate flake + LRL + TiO₂ + Fe₃O₄
substrate flake + LRL + Fe₂O₃ + TiO₂
substrate flake + LRL + TiO₂ + SiO₂ + TiO₂
substrate flake + LRL + TiO₂ + SnO₂ + TiO₂
substrate flake + LRL + TiO₂ + Al₂O₃ + TiO₂
substrate flake + LRL + Fe₂O₃ + SiO₂ + TiO₂
substrate flake + LRL + TiO₂/Fe₂O₃ + SiO₂ + TiO₂
substrate flake + LRL + TiO₂/Fe₂O₃ + SiO₂ + TiO₂/Fe₂O₃
substrate flake + LRL + TiO₂/Fe₂O₃ + SiO₂ + TiO₂ + TiO₂/Fe₂O₃
substrate flake + LRL + TiO₂ + SiO₂ + TiO₂/Fe₂O₃
substrate flake + LRL + TiO₂ + SiO₂
substrate flake + LRL + TiO₂ + Al₂O₃
substrate flake + LRL + TiO₂ + MgO x SiO₂ + TiO₂
substrate flake + LRL + Fe₂O₃ + MgO x SiO₂ + TiO₂
substrate flake + LRL + TiO₂/Fe₂O₃ + MgO x SiO₂ + TiO₂
substrate flake + LRL + TiO₂/Fe₂O₃ + MgO x SiO₂ + TiO₂/Fe₂O₃
substrate flake + LRL + TiO₂/Fe₂O₃ + MgO x SiO₂ + TiO₂ + TiO₂/Fe₂O₃
substrate flake + LRL + TiO₂ + MgO x SiO₂ + TiO₂/Fe₂O₃
substrate flake + LRL + SnO₂ + TiO₂ + SiO₂ + SnO₂ + TiO₂
substrate flake + LRL + SnO₂ + TiO₂ + SnO₂ + TiO₂
substrate flake + LRL + SnO₂ + TiO₂ + Fe₂O₃ + SiO₂ + SnO₂ + TiO₂ + Fe₂O₃
substrate flake + LRL + Fe₂O₃ + SnO₂ + TiO₂
substrate flake + LRL + Fe₂O₃ + SnO₂ + Fe₂O₃
substrate flake + LRL + TiO₂ + SnO₂ + TiO₂
substrate flake + LRL + TiO₂/Fe₂O₃ + SnO₂ + TiO₂
substrate flake + LRL + TiO₂/Fe₂O₃ + SnO₂ + TiO₂/Fe₂O₃
substrate flake + LRL + SnO₂ + TiO₂ + Fe₂O₃ + SnO₂ + TiO₂ + Fe₂O₃
substrate flake + LRL + Fe₂TiO₅ + SnO₂ + Fe₂TiO₅
substrate flake + LRL + Fe₂TiO₅ + SiO₂ + Fe₂TiO₅

It is also possible to use different pearlescent pigments as a mixture in the ceramic colour according to the invention. Preferably, only one type of pearlescent pigment is employed.

Preferred embodiments of the invention comprise the preferred effect pigments and/or uncoated flake-form substrates and the preferred silicon comprising polymers. Especially preferred are combinations wherein all components are used in their particularly preferred variants. Particularly preferred are combinations of preferred effect pigments and preferred silicon comprising polymers in their preferred proportions. Formulations comprising such combinations and screen printing oils are also preferred.

Layer or coating in this application is taken to mean the complete covering of the flake-form substrate.

The pearlescent pigments can be prepared relatively easily. The covering of substrate flakes is preferably carried out by wet-chemical methods, where the wet-chemical coating methods developed for the preparation of pearlescent pigments can be used. Methods of this type are described, for example, in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 or also in further patent documents and other publications known to the person skilled in the art.

Furthermore, the coating of the substrates can also be carried out by gas-phase coating in a fluidised-bed reactor, where, for example, the processes proposed for the preparation of pearlescent pigments in EP 0 045 851 A1 and EP 0 106 235 A1 can be used correspondingly.

In the case of wet coating, the substrate particles are suspended in water, and one or more soluble metal salts are added at a pH which is suitable for hydrolysis, which is selected so that the metal oxides or metal oxide hydrates are precipitated directly onto the flakes without secondary precipitations occurring. The pH is usually kept constant by simultaneous metered addition of a base or acid. The pigments are subsequently separated off, washed and dried and optionally calcined, where the calcination temperature can be optimised with respect to the coating present in each case. In general, the calcination temperatures are between 250 and 1000°C, preferably between 350 and 900°C. If desired, the pigments can be separated off after application of individual coatings, dried and optionally calcined and then resuspended for precipitation of the further layers.

If, for example, a TiO₂ or TiO₂/Fe₂O₃ layer is to be reduced, the reduction of the finished pearlescent pigment is preferably carried out after drying by subsequently calcining the pigment at 500 to 1200°C, preferably at 500 - 1000°C, in particular at 500 - 800°C, for 0.5 - 5 h , preferably for 0.5 - 2 h, under reducing conditions, preferably under forming gas (N₂/H₂). On use of pigments which have been calcined under reducing conditions in the glaze, however, it has proven helpful likewise to select reducing conditions under the firing conditions for the workpiece to be glazed.

In order to improve the wettability and/or compatibility with the printing medium, it is frequently advisable, depending on the area of application, to subject the finished pearlescent pigment to inorganic or organic post-coating or post-treatment. Suitable post-coatings or post-treatments are, for example, the processes described in DE patent 22 15 191, DE-A 31 51 354, DE-A 32 35 017 or DE-A 33 34 598. This post-coating simplifies handling of the pigment, in particular incorporation into various media. In order to improve the wettability, dispersibility and/or compatibility with the application media, functional coatings comprising organic or combined organic/inorganic post-coatings may be possible, for example with silanes, as described, for example, in DE 10348174, EP 0090259, EP 0 342 533, EP 0 632 109, EP 0 888 410, EP 0 634 459, EP 1 203795, WO 94/01498, WO 96/32446, WO 99/57204, WO 2004/092284, U.S. 5,759,255, U.S. 5,571,851, WO 01/92425 or in J.J. Ponjeé, Philips Technical Review, Vol. 44, No. 3, 81 ff. and P.H. Harding J.C. Berg, J. Adhesion Sci. Technol. Vol. 11 No. 4, pp. 471-493. The post-coating merely comprises a proportion by weight of 0.1 to 5% by weight, preferably 0.5 to 3% by weight, based on the pearlescent pigment.

In a particular embodiment of the invention, the pearlescent pigments are hydrophobically or amphiphilically post-coated, which, on application via printing pastes, results in the advantage of more homogeneous distribution in the print medium and thus more homogeneous colour distribution on the workpiece.

The invention expands the range of colours of pigmented ceramic glazes on fired or unfired bricks, floor and wall tiles for indoor or outdoor use, sanitary ceramics, such as bathtubs, washbasins and toilet pans, porcelain crockery, earthenware and ceramicware by attractive interference colours (silver, gold, bronze, copper, red, violet, blue, turquoise, green), and with so-called mass tone pearlescent pigments, which are distinguished by a combination of interference and absorption colour, in particular in the region of gold, brass, bronze, copper, red and green shades. It furthermore also facilitates entirely novel colour effects, such as viewing angle-dependent so-called colour flop effects. The choice of the pearlescent pigment furthermore facilitates novel optical effects, such as sparkle/glitter effects and coarse or fine structures.

The invention also relates to the use of the ceramic colour according to the invention for ceramic glazes on fired or unfired bricks, floor and wall tiles for indoor or outdoor use, sanitary ceramics, porcelain, enamel, metallic workpieces, earthenware and ceramicware. The ceramic colour can be applied onto the unglazed, the glazed or the glazed and fired body.

The invention also relates to the use of a ceramic colour according to the invention for the manufacture of decorative elements on articles exhibiting an outer surface of porcelain, china, bone china, ceramic, glass or enamel.

The invention thus also relates to formulations comprising the ceramic colour according to the invention. Especially mentioned are transfer media for transfer printing on workpieces described.

The invention also relates to glazed articles such as fired or unfired bricks, floor and wall tiles for indoor or outdoor use, sanitary ceramics, porcelain, enamel, metallic workpieces, earthenware and ceramicware comprising a ceramic glaze based on the ceramic colours according to the invention.

According to the invention, the ceramic colours can preferably be prepared by combining the pearlescent pigments with a respective amount of polymer component and printing medium. After homogenisation of the mixture, it can be applied to a workpiece by conventional methods. The ceramic colour may be applied imagewise in order to produce optical patterns or over a large area.

The ceramic colour obtained can be applied to workpieces by standard printing processes such as slip processes, spray application or transfer printing.

The ceramic colours are preferably applied by screen printing on ceramic articles. For smooth surfaces direct printing can be used and for uneven surfaces transfer printing with transfer media can be used. In principal, the ceramic colour may be applied by all printing processes usable for the workpiece (i.e. ink-jet printing, flexographic printing, intaglio printing, tampon printing). Furthermore, the ceramic can also be applied by methods used for coating like spraying, by doctor blade, painting, dip coating, waterfall application. Especially in enamel techniques, dip or bath coating are also common. Preferred examples are screen printing in direct or transfer print. However, hand decoration by brush, stamping or by writing with a pencil can also be used.

After application of the ceramic colour, the coated workpiece can preferably be dried by heating in a drying cabinet or fume hood at temperatures in the range of 60 - 110°C in order to evaporate the solvent present.

The printed or coated and dried ceramic articles are then fired at a temperature in the range of 700°C - 1300°C, preferably 800°C - 1200°C, in particular 850 - 1150°C.

The printed or coated and dried metallic articles are then fired at a temperature in the range of 450°C - 950°C, preferably 500°C - 900°C, in particular 550°C - 850°C.

The printed or coated and dried ceramic or metallic articles are then fired with firing cycles (heating + holding + cooling) of 0.5 - 72 hour, preferably 0.5 - 30 hours, in particular 0.5 - 3 hours.

Holding time itself varies from 1 minute - 68 hours, preferably 1 min - 25 hours, in particular 1 minute - 2 hours.

Heating time itself varies from 0.2 - 36 hour, preferably 0.25 - 15 hours, in particular 0.25 - 4 hours.

Cooling time itself varies from 0.2 - 36 hour, preferably 0.25 -15 hours, in particular 0.25 - 4 hours.

Preferably, the printed and dried ceramic articles are then fired at a temperature >700°C, preferably >800°C, in particular >1000°C.
Preferably, the printed and dried articles are fired in a firing furnace by means of a temperature profile, for example

| | |
|---|---|
| 180 min | : heating to 1100°C, |
| 3 min | : holding at 1100°C, |
| 120 min | : rapid cooling to 600°C, |
| 300 min | : slow cooling to room temperature |

Preferred embodiments of the invention comprise the components, especially the effect pigment and the silicon comprising polymer, and/or the process conditions in their preferred, especially in their particularly preferred variants. Especially preferred are combinations wherein all components and features are in their particularly preferred variants.

The following examples are intended to explain the invention, but without limiting it.

### Examples

For the preparation of ceramic colours, the effect pigments according to Examples 1 to 298 of Table 1 are weighed out and homogenised with the corresponding amount of a polysilsesquioxane and printing oil 221 ME by Ferro.

The polysilsesquioxane has a resulting solid content of 26% SiO₂ after firing.

The pearlescent pigments used in the examples are all commercially available and have the compositions listed in Table 2 (in the "Particle size" column, the d₁₀ - d₉₀ value is measured using a Malvern is indicated in each case):
The printing pastes obtained are applied to tiles by means of doctor blade and screen printing. In all cases, the printed tile is dried in a drying cabinet or fume hood at temperatures of 60 - 110°C in order to evaporate the solvent present in the printing oil.

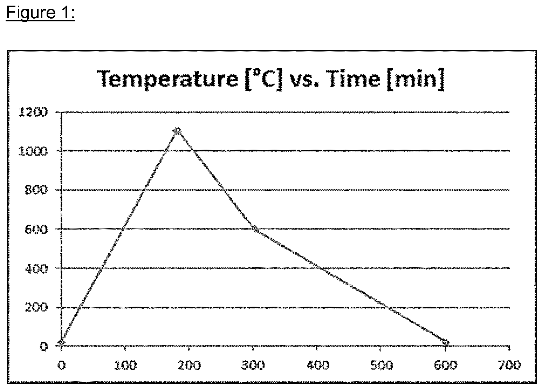

The printed and dried tiles are then fired in a firing furnace by means of a temperature profile in accordance with Figure 1.

| | |
|---|---|
| 180 min | : heating to 1100°C, |
| 3 min | : holding at 1100°C, |
| 120 min | : rapid cooling to 600°C, |
| 300 min | : slow cooling to room temperature |

The temperature programme as a function of time is depicted in Figure 1.

The glazed tiles of the examples according to the invention are distinguished by the fact that the desired optical effects are stable and accessible in a reproducible manner in respective high-temperature applications 500 - 1300°C.

**Table 1**

| **Example No.** | **Pigment [g**] | **Pearlescent Pigment Name** | **Polysilsesquioxane [g]** | **Screen Printing Medium [g]** | **W_{Pigm} in Polymer [%]** | **W_{Pigm} after Firing in Polysilsesquioxane [%]** |
|---|---|---|---|---|---|---|
| 1 | 0.01 | Xirallic© Crystal Silver (Merck KGaA) | 1 | 2 | 0.99 | 3.65 |
| 2 | 0.15 | Xirallic© Crystal Silver (Merck KGaA)) | 0.5 | 2 | 23.08 | 53.17 |
| 3 | 0.3 | Xirallic© Crystal Silver (Merck KGaA) | 0.25 | 2 | 54.55 | 81.96 |
| 4 | 0.5 | Xirallic© Crystal Silver (Merck KGaA) | 0.05 | 2 | 90.91 | 97.43 |
| 5 | 0.01 | Xirallic© Crystal Silver (Merck KGaA) | 1 | 3 | 0.99 | 3.65 |
| 6 | 0.15 | Xirallic© Crystal Silver (Merck KGaA) | 0.5 | 3 | 23.08 | 53.17 |
| 7 | 0.3 | Xirallic© Crystal Silver (Merck KGaA) | 0.25 | 3 | 54.55 | 81.96 |
| 8 | 0.5 | Xirallic© Crystal Silver (Merck KGaA) | 0.05 | 3 | 90.91 | 97.43 |
| 9 | 0.01 | Xirallic© Crystal Silver (Merck KGaA) | 2 | 2 | 0.50 | 1.86 |
| 10 | 0.15 | Xirallic© Crystal Silver (Merck KGaA) | 1.5 | 2 | 9.09 | 27.46 |
| 11 | 0.3 | Xirallic© Crystal Silver (Merck KGaA) | 1 | 2 | 23.08 | 53.17 |
| 12 | 0.5 | Xirallic© Crystal Silver (Merck KGaA) | 0.5 | 2 | 50.00 | 79.10 |
| 13 | 0.01 | Xirallic© Crystal Silver (Merck KGaA) | 0.01 | 2 | 50.00 | 79.10 |
| 14 | 0.15 | Xirallic© Crystal Silver (Merck KGaA) | 3 | 2 | 4.76 | 15.91 |
| 15 | 0.3 | Xirallic© Crystal Silver (Merck KGaA) | 1.2 | 2 | 20.00 | 48.62 |
| 16 | 0.5 | Xirallic© Crystal Silver (Merck KGaA) | 0.7 | 2 | 41.67 | 73.00 |
| 17 | 4.5 | Xirallic© Crystal Silver (Merck KGaA) | 0.5 | 2 | 90.00 | 97.15 |
| 18 | 0.5 | Xirallic© Crystal Silver (Merck KGaA) | 0.25 | 2 | 66.67 | 88.33 |
| 19 | 4.9 | Xirallic© Crystal Silver (Merck KGaA) | 0.1 | 2 | 98.00 | 99.46 |
| 20 | 0.01 | Iriodin© 103 (Merck KGaA) | 1 | 2 | 0.99 | 3.65 |
| 21 | 0.15 | Iriodin© 103 (Merck KGaA) | 0.5 | 2 | 23.08 | 53.17 |
| 22 | 0.3 | Iriodin© 103 (Merck KGaA) | 0.25 | 2 | 54.55 | 81.96 |
| 23 | 0.5 | Iriodin© 103 (Merck KGaA) | 0.05 | 2 | 90.91 | 97.43 |
| 24 | 0.01 | Iriodin© 103 (Merck KGaA) | 1 | 3 | 0.99 | 3.65 |
| 25 | 0.15 | Iriodin© 103 (Merck KGaA) | 0.5 | 3 | 23.08 | 53.17 |
| 26 | 0.3 | Iriodin© 103 (Merck KGaA) | 0.25 | 3 | 54.55 | 81.96 |
| 27 | 0.5 | Iriodin© 103 (Merck KGaA) | 0.05 | 3 | 90.91 | 97.43 |
| 28 | 0.01 | Iriodin© 103 (Merck KGaA) | 2 | 2 | 0.50 | 1.86 |
| 29 | 0.15 | Iriodin© 103 (Merck KGaA) | 1.5 | 2 | 9.09 | 27.46 |
| 30 | 0.3 | Iriodin© 103 (Merck KGaA) | 1 | 2 | 23.08 | 53.17 |
| 31 | 0.5 | Iriodin© 103 (Merck KGaA) | 0.5 | 2 | 50.00 | 79.10 |
| 32 | 0.01 | Iriodin© 103 (Merck KGaA) | 0.01 | 2 | 50.00 | 79.10 |
| 33 | 0.15 | Iriodin© 103 (Merck KGaA) | 3 | 2 | 4.76 | 15.91 |
| 34 | 0.3 | Iriodin© 103 (Merck KGaA) | 1.2 | 2 | 20.00 | 48.62 |
| 35 | 0.5 | Iriodin© 103 (Merck KGaA) | 0.7 | 2 | 41.67 | 73.00 |
| 36 | 4.5 | Iriodin© 103 (Merck KGaA) | 0.5 | 2 | 90.00 | 97.15 |
| 37 | 0.5 | Iriodin© 103 (Merck KGaA) | 0.25 | 2 | 66.67 | 88.33 |
| 38 | 4.9 | Iriodin© 103 (Merck KGaA) | 0.1 | 2 | 98.00 | 99.46 |
| 39 | 0.01 | Iriodin© 305 (Merck KGaA) | 1 | 2 | 0.99 | 3.65 |
| 40 | 0.15 | Iriodin© 305 (Merck KGaA) | 0.5 | 2 | 23.08 | 53.17 |
| 41 | 0.3 | Iriodin© 305 (Merck KGaA) | 0.25 | 2 | 54.55 | 81.96 |
| 42 | 0.5 | Iriodin© 305 (Merck KGaA) | 0.05 | 2 | 90.91 | 97.43 |
| 43 | 0.01 | Iriodin© 305 (Merck KGaA) | 1 | 3 | 0.99 | 3.65 |
| 44 | 0.15 | Iriodin© 305 (Merck KGaA) | 0.5 | 3 | 23.08 | 53.17 |
| 45 | 0.3 | Iriodin© 305 (Merck KGaA) | 0.25 | 3 | 54.55 | 81.96 |
| 46 | 0.5 | Iriodin© 305 (Merck KGaA) | 0.05 | 3 | 90.91 | 97.43 |
| 47 | 0.01 | Iriodin© 305 (Merck KGaA) | 2 | 2 | 0.50 | 1.86 |
| 48 | 0.15 | Iriodin© 305 (Merck KGaA) | 1.5 | 2 | 9.09 | 27.46 |
| 49 | 0.3 | Iriodin© 305 (Merck KGaA) | 1 | 2 | 23.08 | 53.17 |
| 50 | 0.5 | Iriodin© 305 (Merck KGaA) | 0.5 | 2 | 50.00 | 79.10 |
| 51 | 0.01 | Iriodin© 305 (Merck KGaA) | 0.01 | 2 | 50.00 | 79.10 |
| 52 | 0.15 | Iriodin© 305 (Merck KGaA) | 3 | 2 | 4.76 | 15.91 |
| 53 | 0.3 | Iriodin© 305 (Merck KGaA) | 1.2 | 2 | 20.00 | 48.62 |
| 54 | 0.5 | Iriodin© 305 (Merck KGaA) | 0.7 | 2 | 41.67 | 73.00 |
| 55 | 4.5 | Iriodin© 305 (Merck KGaA) | 0.5 | 2 | 90.00 | 97.15 |
| 56 | 0.5 | Iriodin© 305 (Merck KGaA) | 0.25 | 2 | 66.67 | 88.33 |
| 57 | 4.9 | Iriodin© 305 (Merck KGaA) | 0.1 | 2 | 98.00 | 99.46 |
| 58 | 0.01 | Iriodin© 4504 Lava Red (Merck KGaA) | 1 | 2 | 0.99 | 3.65 |
| 59 | 0.15 | Iriodin© 4504 Lava Red (Merck KGaA) | 0.5 | 2 | 23.08 | 53.17 |
| 60 | 0.3 | Iriodin© 4504 Lava Red (Merck KGaA) | 0.25 | 2 | 54.55 | 81.96 |
| 61 | 0.5 | Iriodin© 4504 Lava Red (Merck KGaA) | 0.05 | 2 | 90.91 | 97.43 |
| 62 | 0.01 | Iriodin© 4504 Lava Red (Merck KGaA) | 1 | 3 | 0.99 | 3.65 |
| 63 | 0.15 | Iriodin© 4504 Lava Red (Merck KGaA) | 0.5 | 3 | 23.08 | 53.17 |
| 64 | 0.3 | Iriodin© 4504 Lava Red (Merck KGaA) | 0.25 | 3 | 54.55 | 81.96 |
| 65 | 0.5 | Iriodin© 4504 Lava Red (Merck KGaA) | 0.05 | 3 | 90.91 | 97.43 |
| 66 | 0.01 | Iriodin© 4504 Lava Red (Merck KGaA) | 2 | 2 | 0.50 | 1.86 |
| 67 | 0.15 | Iriodin© 4504 Lava Red (Merck KGaA) | 1.5 | 2 | 9.09 | 27.46 |
| 68 | 0.3 | Iriodin© 4504 Lava Red (Merck KGaA) | 1 | 2 | 23.08 | 53.17 |
| 69 | 0.5 | Iriodin© 4504 Lava Red (Merck KGaA) | 0.5 | 2 | 50.00 | 79.10 |
| 70 | 0.01 | Iriodin© 4504 Lava Red (Merck KGaA) | 0.01 | 2 | 50.00 | 79.10 |
| 71 | 0.15 | Iriodin© 4504 Lava Red (Merck KGaA) | 3 | 2 | 4.76 | 15.91 |
| 72 | 0.3 | Iriodin© 4504 Lava Red (Merck KGaA) | 1.2 | 2 | 20.00 | 48.62 |
| 73 | 0.5 | Iriodin© 4504 Lava Red (Merck KGaA) | 0.7 | 2 | 41.67 | 73.00 |
| 74 | 4.5 | Iriodin© 4504 Lava Red (Merck KGaA) | 0.5 | 2 | 90.00 | 97.15 |
| 75 | 0.5 | Iriodin© 4504 Lava Red (Merck KGaA) | 0.25 | 2 | 66.67 | 88.33 |
| 76 | 4.9 | Iriodin© 4504 Lava Red (Merck KGaA) | 0.1 | 2 | 98.00 | 99.46 |
| 77 | 0.01 | Iriodin© 9219 (Merck KGaA) | 1 | 2 | 0.99 | 3.65 |
| 78 | 0.15 | Iriodin© 9219 (Merck KGaA) | 0.5 | 2 | 23.08 | 53.17 |
| 79 | 0.3 | Iriodin© 9219 (Merck KGaA) | 0.25 | 2 | 54.55 | 81.96 |
| 80 | 0.5 | Iriodin© 9219 (Merck KGaA) | 0.05 | 2 | 90.91 | 97.43 |
| 81 | 0.01 | Iriodin© 9219 (Merck KGaA) | 1 | 3 | 0.99 | 3.65 |
| 82 | 0.15 | Iriodin© 9219 (Merck KGaA) | 0.5 | 3 | 23.08 | 53.17 |
| 83 | 0.3 | Iriodin© 9219 (Merck KGaA) | 0.25 | 3 | 54.55 | 81.96 |
| 84 | 0.5 | Iriodin© 9219 (Merck KGaA) | 0.05 | 3 | 90.91 | 97.43 |
| 85 | 0.01 | Iriodin© 9219 (Merck KGaA) | 2 | 2 | 0.50 | 1.86 |
| 86 | 0.15 | Iriodin© 9219 (Merck KGaA) | 1.5 | 2 | 9.09 | 27.46 |
| 87 | 0.3 | Iriodin© 9219 (Merck KGaA) | 1 | 2 | 23.08 | 53.17 |
| 88 | 0.5 | Iriodin© 9219 (Merck KGaA) | 0.5 | 2 | 50.00 | 79.10 |
| 89 | 0.01 | Iriodin© 9219 (Merck KGaA) | 0.01 | 2 | 50.00 | 79.10 |
| 90 | 0.15 | Iriodin© 9219 (Merck KGaA) | 3 | 2 | 4.76 | 15.91 |
| 91 | 0.3 | Iriodin© 9219 (Merck KGaA) | 1.2 | 2 | 20.00 | 48.62 |
| 92 | 0.5 | Iriodin© 9219 (Merck KGaA) | 0.7 | 2 | 41.67 | 73.00 |
| 93 | 4.5 | Iriodin© 9219 (Merck KGaA) | 0.5 | 2 | 90.00 | 97.15 |
| 94 | 0.5 | Iriodin© 9219 (Merck KGaA) | 0.25 | 2 | 66.67 | 88.33 |
| 95 | 4.9 | Iriodin© 9219 (Merck KGaA) | 0.1 | 2 | 98.00 | 99.46 |
| 96 | 0.01 | Iriodin© 9444 (Merck KGaA) | 1 | 2 | 0.99 | 3.65 |
| 97 | 0.15 | Iriodin© 9444 (Merck KGaA) | 0.5 | 2 | 23.08 | 53.17 |
| 98 | 0.3 | Iriodin© 9444 (Merck KGaA) | 0.25 | 2 | 54.55 | 81.96 |
| 99 | 0.5 | Iriodin© 9444 (Merck KGaA) | 0.05 | 2 | 90.91 | 97.43 |
| 100 | 0.01 | Iriodin© 9444 (Merck KGaA) | 1 | 3 | 0.99 | 3.65 |
| 101 | 0.15 | Iriodin© 9444 (Merck KGaA) | 0.5 | 3 | 23.08 | 53.17 |
| 102 | 0.3 | Iriodin© 9444 (Merck KGaA) | 0.25 | 3 | 54.55 | 81.96 |
| 103 | 0.5 | Iriodin© 9444 (Merck KGaA) | 0.05 | 3 | 90.91 | 97.43 |
| 104 | 0.01 | Iriodin© 9444 (Merck KGaA) | 2 | 2 | 0.50 | 1.86 |
| 105 | 0.15 | Iriodin© 9444 (Merck KGaA) | 1.5 | 2 | 9.09 | 27.46 |
| 106 | 0.3 | Iriodin© 9444 (Merck KGaA) | 1 | 2 | 23.08 | 53.17 |
| 107 | 0.5 | Iriodin© 9444 (Merck KGaA) | 0.5 | 2 | 50.00 | 79.10 |
| 108 | 0.01 | Iriodin© 9444 (Merck KGaA) | 0.01 | 2 | 50.00 | 79.10 |
| 109 | 0.15 | Iriodin© 9444 (Merck KGaA) | 3 | 2 | 4.76 | 15.91 |
| 110 | 0.3 | Iriodin© 9444 (Merck KGaA) | 1.2 | 2 | 20.00 | 48.62 |
| 111 | 0.5 | Iriodin© 9444 (Merck KGaA) | 0.7 | 2 | 41.67 | 73.00 |
| 112 | 4.5 | Iriodin© 9444 (Merck KGaA) | 0.5 | 2 | 90.00 | 97.15 |
| 113 | 0.5 | Iriodin© 9444 (Merck KGaA) | 0.25 | 2 | 66.67 | 88.33 |
| 114 | 4.9 | Iriodin© 9444 (Merck KGaA) | 0.1 | 2 | 98.00 | 99.46 |
| 115 | 0.01 | Iriodin© 9504 (Merck KGaA) | 1 | 2 | 0.99 | 3.65 |
| 116 | 0.15 | Iriodin© 9504 (Merck KGaA) | 0.5 | 2 | 23.08 | 53.17 |
| 117 | 0.3 | Iriodin© 9504 (Merck KGaA) | 0.25 | 2 | 54.55 | 81.96 |
| 118 | 0.5 | Iriodin© 9504 (Merck KGaA) | 0.05 | 2 | 90.91 | 97.43 |
| 119 | 0.01 | Iriodin© 9504 (Merck KGaA) | 1 | 3 | 0.99 | 3.65 |
| 120 | 0.15 | Iriodin© 9504 (Merck KGaA) | 0.5 | 3 | 23.08 | 53.17 |
| 121 | 0.3 | Iriodin© 9504 (Merck KGaA) | 0.25 | 3 | 54.55 | 81.96 |
| 122 | 0.5 | Iriodin© 9504 (Merck KGaA) | 0.05 | 3 | 90.91 | 97.43 |
| 123 | 0.01 | Iriodin© 9504 (Merck KGaA) | 2 | 2 | 0.50 | 1.86 |
| 124 | 0.15 | Iriodin© 9504 (Merck KGaA) | 1.5 | 2 | 9.09 | 27.46 |
| 125 | 0.3 | Iriodin© 9504 (Merck KGaA) | 1 | 2 | 23.08 | 53.17 |
| 126 | 0.5 | Iriodin© 9504 (Merck KGaA) | 0.5 | 2 | 50.00 | 79.10 |
| 127 | 0.01 | Iriodin© 9504 (Merck KGaA) | 0.01 | 2 | 50.00 | 79.10 |
| 128 | 0.15 | Iriodin© 9504 (Merck KGaA) | 3 | 2 | 4.76 | 15.91 |
| 129 | 0.3 | Iriodin© 9504 (Merck KGaA) | 1.2 | 2 | 20.00 | 48.62 |
| 130 | 0.5 | Iriodin© 9504 (Merck KGaA) | 0.7 | 2 | 41.67 | 73.00 |
| 131 | 4.5 | Iriodin© 9504 (Merck KGaA) | 0.5 | 2 | 90.00 | 97.17 |
| 132 | 0.5 | Iriodin© 9504 (Merck KGaA) | 0.25 | 2 | 66.67 | 88.33 |
| 133 | 4.9 | Iriodin© 9504 (Merck KGaA) | 0.1 | 2 | 98.00 | 99.46 |
| 134 | 0.01 | Xirallic© F60-50 (Merck KGaA) | 1 | 2 | 0.99 | 3.65 |
| 135 | 0.15 | Xirallic© F60-50 (Merck KGaA) | 0.5 | 2 | 23.08 | 53.17 |
| 136 | 0.3 | Xirallic© F60-50 (Merck KGaA) | 0.25 | 2 | 54.55 | 81.96 |
| 137 | 0.5 | Xirallic© F60-50 (Merck KGaA) | 0.05 | 2 | 90.91 | 97.43 |
| 138 | 0.01 | Xirallic© F60-50 (Merck KGaA) | 1 | 3 | 0.99 | 3.65 |
| 139 | 0.15 | Xirallic© F60-50 (Merck KGaA) | 0.5 | 3 | 23.08 | 53.17 |
| 140 | 0.3 | Xirallic© F60-50 (Merck KGaA) | 0.25 | 3 | 54.55 | 81.96 |
| 141 | 0.5 | Xirallic© F60-50 (Merck KGaA) | 0.05 | 3 | 90.91 | 97.43 |
| 142 | 0.01 | Xirallic© F60-50 (Merck KGaA) | 2 | 2 | 0.50 | 1.86 |
| 143 | 0.15 | Xirallic© F60-50 (Merck KGaA) | 1.5 | 2 | 9.09 | 27.46 |
| 144 | 0.3 | Xirallic© F60-50 (Merck KGaA) | 1 | 2 | 23.08 | 53.17 |
| 145 | 0.5 | Xirallic© F60-50 (Merck KGaA) | 0.5 | 2 | 50.00 | 79.10 |
| 146 | 0.01 | Xirallic© F60-50 (Merck KGaA) | 0.01 | 2 | 50.00 | 79.10 |
| 147 | 0.15 | Xirallic© F60-50 (Merck KGaA) | 3 | 2 | 4.76 | 15.91 |
| 148 | 0.3 | Xirallic© F60-50 (Merck KGaA) | 1.2 | 2 | 20.00 | 48.62 |
| 149 | 0.5 | Xirallic© F60-50 (Merck KGaA) | 0.7 | 2 | 41.67 | 73.00 |
| 150 | 4.5 | Xirallic© F60-50 (Merck KGaA) | 0.5 | 2 | 90.00 | 97.15 |
| 151 | 0.5 | Xirallic© F60-50 (Merck KGaA) | 0.25 | 2 | 66.67 | 88.33 |
| 152 | 4.9 | Xirallic© F60-50 (Merck KGaA) | 0.1 | 2 | 98.00 | 99.46 |
| 153 | 0.01 | Xirallic© F60-51 (Merck KGaA) | 1 | 2 | 0.99 | 3.65 |
| 154 | 0.15 | Xirallic© F60-51 (Merck KGaA) | 0.5 | 2 | 23.08 | 53.17 |
| 155 | 0.3 | Xirallic© F60-51 (Merck KGaA) | 0.25 | 2 | 54.55 | 81.96 |
| 156 | 0.5 | Xirallic© F60-51 (Merck KGaA) | 0.05 | 2 | 90.91 | 97.43 |
| 157 | 0.01 | Xirallic© F60-51 (Merck KGaA) | 1 | 3 | 0.99 | 3.65 |
| 158 | 0.15 | Xirallic© F60-51 (Merck KGaA) | 0.5 | 3 | 23.08 | 53.17 |
| 159 | 0.3 | Xirallic© F60-51 (Merck KGaA) | 0.25 | 3 | 54.55 | 81.96 |
| 160 | 0.5 | Xirallic© F60-51 (Merck KGaA) | 0.05 | 3 | 90.91 | 97.43 |
| 161 | 0.01 | Xirallic© F60-51 (Merck KGaA) | 2 | 2 | 0.50 | 1.86 |
| 162 | 0.15 | Xirallic© F60-51 (Merck KGaA) | 1.5 | 2 | 9.09 | 27.46 |
| 163 | 0.3 | Xirallic© F60-51 (Merck KGaA) | 1 | 2 | 23.08 | 53.17 |
| 164 | 0.5 | Xirallic© F60-51 (Merck KGaA) | 0.5 | 2 | 50.00 | 79.10 |
| 165 | 0.01 | Xirallic© F60-51 (Merck KGaA) | 0.01 | 2 | 50.00 | 79.10 |
| 166 | 0.15 | Xirallic© F60-51 (Merck KGaA) | 3 | 2 | 4.76 | 15.91 |
| 167 | 0.3 | Xirallic© F60-51 (Merck KGaA) | 1.2 | 2 | 20.00 | 48.62 |
| 168 | 0.5 | Xirallic© F60-51 (Merck KGaA) | 0.7 | 2 | 41.67 | 73.00 |
| 169 | 4.5 | Xirallic© F60-51 (Merck KGaA) | 0.5 | 2 | 90.00 | 97.15 |
| 170 | 0.5 | Xirallic© F60-51 (Merck KGaA) | 0.25 | 2 | 66.67 | 88.33 |
| 171 | 4.9 | Xirallic© F60-51 (Merck KGaA) | 0.1 | 2 | 98.00 | 99.46 |
| 172 | 0.01 | Pyrisma© M40-58 (Merck KGaA) | 1 | 2 | 0.99 | 3.65 |
| 173 | 0.15 | Pyrisma© M40-58 (Merck KGaA) | 0.5 | 2 | 23.08 | 53.17 |
| 174 | 0.3 | Pyrisma© M40-58 (Merck KGaA) | 0.25 | 2 | 54.55 | 81.96 |
| 175 | 0.5 | Pyrisma© M40-58 (Merck KGaA) | 0.05 | 2 | 90.91 | 97.43 |
| 176 | 0.01 | Pyrisma© M40-58 (Merck KGaA) | 1 | 3 | 0.99 | 3.65 |
| 177 | 0.15 | Pyrisma© M40-58 (Merck KGaA) | 0.5 | 3 | 23.08 | 53.17 |
| 178 | 0.3 | Pyrisma© M40-58 (Merck KGaA) | 0.25 | 3 | 54.55 | 81.96 |
| 179 | 0.5 | Pyrisma© M40-58 (Merck KGaA) | 0.05 | 3 | 90.91 | 97.43 |
| 180 | 0.01 | Pyrisma© M40-58 (Merck KGaA) | 2 | 2 | 0.50 | 1.86 |
| 181 | 0.15 | Pyrisma© M40-58 (Merck KGaA) | 1.5 | 2 | 9.09 | 27.46 |
| 182 | 0.3 | Pyrisma© M40-58 (Merck KGaA) | 1 | 2 | 23.08 | 53.17 |
| 183 | 0.5 | Pyrisma© M40-58 (Merck KGaA) | 0.5 | 2 | 50.00 | 79.10 |
| 184 | 0.01 | Pyrisma© M40-58 (Merck KGaA) | 0.01 | 2 | 50.00 | 79.10 |
| 185 | 0.15 | Pyrisma© M40-58 (Merck KGaA) | 3 | 2 | 4.76 | 15.91 |
| 186 | 0.3 | Pyrisma© M40-58 (Merck KGaA) | 1.2 | 2 | 20.00 | 48.62 |
| 187 | 0.5 | Pyrisma© M40-58 (Merck KGaA) | 0.7 | 2 | 41.67 | 73.00 |
| 188 | 4.5 | Pyrisma© M40-58 (Merck KGaA) | 0.5 | 2 | 90.00 | 97.15 |
| 189 | 0.5 | Pyrisma© M40-58 (Merck KGaA) | 0.25 | 2 | 66.67 | 88.33 |
| 190 | 4.9 | Pyrisma© M40-58 (Merck KGaA) | 0.1 | 2 | 98.00 | 99.46 |
| 191 | 0.5 | SynCrystal© Silver (Eckart GmbH) | 0.25 | 2 | 66.67 | 88.33 |
| 192 | 0.5 | SYMIC© B001 Silber (Eckart GmbH) | 0.25 | 2 | 66.67 | 88.33 |
| 193 | 0.5 | SYMIC© C001 Silber (Eckart GmbH) | 0.25 | 2 | 66.67 | 88.33 |
| 194 | 0.5 | SYMIC© C604 Silber (Eckart GmbH) | 0.25 | 2 | 66.67 | 88.33 |
| 195 | 0.5 | SYMIC© OEM X-fine Silver (Eckart GmbH) | 0.25 | 2 | 66.67 | 88.33 |
| 196 | 0.5 | SYMIC© C393 Gold (Eckart GmbH) | 0.25 | 2 | 66.67 | 88.33 |
| 197 | 0.5 | SYMIC© C522 Erdfarbton Kupfer (Eckart GmbH) | 0.25 | 2 | 66.67 | 88.33 |
| 198 | 0.5 | SYMIC© C542 Erdfarbton Feuer-Rot (Eckart GmbH) | 0.25 | 2 | 66.67 | 88.33 |
| 199 | 0.5 | SYMIC© OEM Medium Space Gold (Eckart GmbH) | 0.25 | 2 | 66.67 | 88.33 |
| 200 | 0.5 | Magnapearl© 1000 (BASF AG) | 0.25 | 2 | 66.67 | 88.33 |
| 201 | 0.5 | Magnapearl© 2000 (BASF AG) | 0.25 | 2 | 66.67 | 88.33 |
| 202 | 0.5 | Magnapearl© 3100 (BASF AG) | 0.25 | 2 | 66.67 | 88.33 |
| 203 | 0.5 | Luminal© Brass 9232D (BASF AG) | 0.25 | 2 | 66.67 | 88.33 |
| 204 | 0.5 | Lumina© Copper 9350D (BASF AG) | 0.25 | 2 | 66.67 | 88.33 |
| 205 | 0.5 | Luminal© Exterior Gold 2303D (BASF AG) | 0.25 | 2 | 66.67 | 88.33 |
| 206 | 0.5 | Lumina© Russet 9450D (BASF AG) | 0.25 | 2 | 66.67 | 88.33 |
| 207 | 0.5 | Luminal© Royal Copper (BASF AG) | 0.25 | 2 | 66.67 | 88.33 |
| 208 | 0.5 | Lumina© Royal Magenta (BASF AG) | 0.25 | 2 | 66.67 | 88.33 |
| 209 | 0.5 | Lumina© Royal Blue (BASF AG) | 0.25 | 2 | 66.67 | 88.33 |
| 210 | 0.5 | Exterior Polar White KC9119-SW (Fujian Kuncai Fine Chemicals Co., Ltd.) | 0.25 | 2 | 66.67 | 88.33 |
| 211 | 0.5 | Exterior Sterling White KC9103-SW (Fujian Kuncai Fine Chemicals Co., Ltd.) | 0.25 | 2 | 66.67 | 88.33 |
| 212 | 0.5 | Exterior Fine Gold Satin KC9201-SW (Fujian Kuncai Fine Chemicals Co., Ltd.) | 0.25 | 2 | 66.67 | 88.33 |
| 213 | 0.5 | Exterior Platinum Pearl KC9205-SW (Fujian Kuncai Fine Chemicals Co., Ltd.) | 0.25 | 2 | 66.67 | 88.33 |
| 214 | 0.5 | Exterior Gold Pearl KC9300-SW (Fujian Kuncai Fine Chemicals Co., Ltd.) | 0.25 | 2 | 66.67 | 88.3 |
| 215 | 0.5 | Exterior Royal Gold KC9303-SW (Fujian Kuncai Fine Chemicals Co., Ltd.) | 0.25 | 2 | 66.67 | 88.33 |
| 216 | 0.5 | Exterior Royal Gold Satin KC9323-SW (Fujian Kuncai Fine Chemicals Co., Ltd.) | 0.25 | 2 | 66.67 | 88.33 |
| 217 | 0.5 | Exterior Bright Gold KC9307-SW (Fujian Kuncai Fine | 0.25 | 2 | 66.67 | 88.33 |
| | | Chemicals Co., Ltd.) | | | | |
| 218 | 0.5 | Exterior Bronze KC9502-SW (Fujian Kuncai Fine Chemicals Co., Ltd.) | 0.25 | 2 | 66.67 | 88.33 |
| 219 | 0.5 | Exterior Wine Red KC9504-SW (Fujian Kuncai Fine Chemicals Co., Ltd.) | 0.25 | 2 | 66.67 | 88.33 |
| 220 | 0.5 | Exterior Ruby KC9508-SW (Fujian Kuncai Fine Chemicals Co., Ltd.) | 0.25 | 2 | 66.67 | 88.33 |
| 221 | 0.01 | ADAMAS© A-100D (CQV Co., Ltd.) | 1 | 2 | 0.99 | 3.65 |
| 222 | 0.15 | ADAMAS© A-100D (CQV Co., Ltd.) | 0.5 | 2 | 23.08 | 53.17 |
| 223 | 0.3 | ADAMAS© A-100D (CQV Co., Ltd.) | 0.25 | 2 | 54.55 | 81.96 |
| 224 | 0.5 | ADAMAS© A-100D (CQV Co., Ltd.) | 0.05 | 2 | 90.91 | 97.43 |
| 225 | 0.01 | ADAMAS© A-100D (CQV Co., Ltd.) | 1 | 3 | 0.99 | 3.65 |
| 226 | 0.15 | ADAMAS© A-100D (CQV Co., Ltd.) | 0.5 | 3 | 23.08 | 53.17 |
| 227 | 0.5 | ADAMAS© A-901K Splendor White (CQV Co., Ltd.) | 0.25 | 2 | 66.67 | 88.33 |
| 228 | 0.5 | ADAMAS© A-901S Dazzling White (CQV Co., Ltd.) | 0.25 | 2 | 66.67 | 88.33 |
| 229 | 0.15 | ADAMAS© A-901S Dazzling White (CQV Co., Ltd.) | 0.5 | 2 | 23.08 | 53.17 |
| 230 | 0.3 | ADAMAS© A-901S Dazzling White (CQV Co., Ltd.) | 0.25 | 2 | 54.55 | 81.96 |
| 231 | 0.5 | ADAMAS© A-901K Splendor Gold (CQV Co., Ltd.) | 0.25 | 2 | 66.67 | 88.33 |
| 232 | 0.15 | ADAMAS© A-901K Splendor Gold (CQV Co., Ltd.) | 0.5 | 2 | 23.08 | 53.17 |
| 233 | 0.3 | ADAMAS© A-901K Splendor Gold (CQV Co., Ltd.) | 0.25 | 2 | 54.55 | 81.96 |
| 234 | 0.5 | ADAMAS© A-701S Dazzling Gold (CQV Co., Ltd.) | 0.25 | 2 | 66.67 | 88.33 |
| 235 | 0.15 | ADAMAS© A-701S Dazzling Gold (CQV Co., Ltd.) | 0.5 | 2 | 23.08 | 53.17 |
| 236 | 0.3 | ADAMAS© A-701S Dazzling Gold (CQV Co., Ltd.) | 0.25 | 2 | 54.55 | 81.96 |
| 237 | 0.5 | ADAMAS© A-741S Dazzling Red (CQV Co., Ltd.) | 0.25 | 2 | 66.67 | 88.33 |
| 238 | 0.5 | ADAMAS© A-781K Splendor Blue (CQV Co., Ltd.) | 0.25 | 2 | 66.67 | 88.33 |
| 239 | 0.5 | ADAMAS© A-781S Dazzling Blue (CQV Co., Ltd.) | 0.25 | 2 | 66.67 | 88.33 |
| 240 | 0.5 | ADAMAS© A-620S Dazzling Bronze (CQV Co., Ltd.) | 0.25 | 2 | 66.67 | 88.33 |
| 241 | 0.15 | ADAMAS© A-620S Dazzling | 0.5 | 2 | 23.08 | 53.17 |
| | | Bronze (CQV Co., Ltd.) | | | | |
| 242 | 0.3 | ADAMAS© A-620S Dazzling Bronze (CQV Co., Ltd.) | 0.25 | 2 | 54.55 | 81.96 |
| 243 | 0.5 | ADAMAS© A-640K Splendor Copper (CQV Co., Ltd.) | 0.25 | 2 | 66.67 | 88.33 |
| 244 | 0.15 | ADAMAS© A-640K Splendor Copper (CQV Co., Ltd.) | 0.5 | 2 | 23.08 | 53.17 |
| 245 | 0.3 | ADAMAS© A-640K Splendor Copper (CQV Co., Ltd.) | 0.25 | 2 | 54.55 | 81.96 |
| 246 | 0.5 | ADAMAS© A-640S Dazzling Copper (CQV Co., Ltd.) | 0.25 | 2 | 66.67 | 88.33 |
| 247 | 0.15 | ADAMAS© A-640S Dazzling Copper (CQV Co., Ltd.) | 0.5 | 2 | 23.08 | 53.17 |
| 248 | 0.3 | ADAMAS© A-640S Dazzling Copper (CQV Co., Ltd.) | 0.25 | 2 | 54.55 | 81.96 |
| 249 | 0.5 | ADAMAS© A-660K Splendor Russet (CQV Co., Ltd.) | 0.25 | 2 | 66.67 | 88.33 |
| 250 | 0.15 | ADAMAS© A-660K Splendor Russet (CQV Co., Ltd.) | 0.5 | 2 | 23.08 | 53.17 |
| 251 | 0.3 | ADAMAS© A-660K Splendor Russet (CQV Co., Ltd.) | 0.25 | 2 | 54.55 | 81.96 |
| 252 | 0.5 | ADAMAS© A-660S Dazzling Russet (CQV Co., Ltd.) | 0.25 | 2 | 66.67 | 88.33 |
| 253 | 0.5 | CHAOS© C-901M Rutile Ultra Silk (CQV Co., Ltd.) | 0.25 | 2 | 66.67 | 88.33 |
| 254 | 0.5 | CHAOS© C-901D Rutile Fine White (CQV Co., Ltd.) | 0.25 | 2 | 66.67 | 88.33 |
| 255 | 0.5 | CHAOS© C-900D Fine White (CQV Co., Ltd.) | 0.25 | 2 | 66.67 | 88.33 |
| 256 | 0.5 | CHAOS© C-907K Skye White (CQV Co., Ltd.) | 0.25 | 2 | 66.67 | 88.33 |
| 257 | 0.5 | CHAOS© C-901K Splendor White (CQV Co., Ltd.) | 0.25 | 2 | 66.67 | 88.33 |
| 258 | 0.5 | CHAOS© C-901S Rutile Dazzling Standard (CQV Co., Ltd.) | 0.25 | 2 | 66.67 | 88.33 |
| 259 | 0.5 | CHAOS© C-900S Dazzling Standard (CQV Co., Ltd.) | 0.25 | 2 | 66.67 | 88.33 |
| 260 | 0.5 | CHAOS© C-902S Super White (CQV Co., Ltd.) | 0.25 | 2 | 66.67 | 88.33 |
| 261 | 0.5 | CHAOS© C-109S Super Pearl (CQV Co., Ltd.) | 0.25 | 2 | 66.67 | 88.33 |
| 262 | 0.5 | CHAOS© C-109B Shimmering White (CQV Co., Ltd.) | 0.25 | 2 | 66.67 | 88.33 |
| 63 | 0.5 | CHAOS© C-901E Glitter Pearl (CQV Co., Ltd.) | 0.25 | 2 | 66.67 | 88.33 |
| 264 | 0.5 | FERRIUS© F-620K Splendor Bronze (CQV Co., Ltd.) | 0.25 | 2 | 66.67 | 88.33 |
| 265 | 0.5 | FERRIUS© F-630K Splendor Orange (CQV Co., Ltd.) | 0.25 | 2 | 66.67 | 88.33 |
| 266 | 0.5 | FERRIUS© F-640K Splendor Copper (CQV Co., Ltd.) | 0.25 | 2 | 66.67 | 88.33 |
| 267 | 0.5 | FERRIUS© F-660K Splendor Russet (CQV Co., Ltd.) | 0.25 | 2 | 66.67 | 88.33 |
| 268 | 0.5 | FERRIUS© F-620P Crystal Bronze (CQV Co., Ltd.) | 0.25 | 2 | 66.67 | 88.33 |
| 269 | 0.5 | FERRIUS© F-630P Crystal Orange (CQV Co., Ltd.) | 0.25 | 2 | 66.67 | 88.33 |
| 270 | 0.5 | FERRIUS© F-640P Crystal Copper (CQV Co., Ltd.) | 0.25 | 2 | 66.67 | 88.33 |
| 271 | 0.5 | FERRIUS© F-660P Crystal Russet (CQV Co., Ltd.) | 0.25 | 2 | 66.67 | 88.33 |
| 272 | 0.5 | Magchrom© N-5001C Natural Corona Gold (CQV Co., Ltd.) | 0.25 | 2 | 66.67 | 88.33 |
| 273 | 0.5 | Magchrom© N-5001S Natural Dazzling Gold (CQV Co., Ltd.) | 0.25 | 2 | 66.67 | 88.33 |
| 274 | 0.5 | Magchrom© S-7801C Corona Blue (CQV Co., Ltd.) | 0.25 | 2 | 66.67 | 88.33 |
| 275 | 0.5 | REFLEX© RCN-1008S Snow White Pearl (CQV Co., Ltd.) | 0.25 | 2 | 66.67 | 88.33 |
| 276 | 0.5 | Thermaval© Metallic Silver (Merck KGaA) | 0.25 | 2 | 66.67 | 88.33 |
| 277 | 0.5 | Thermaval© Metallic Gold (Merck KGaA) | 0.25 | 2 | 66.67 | 88.33 |
| 278 | 0.5 | Thermaval© Metallic Red (Merck KGaA) | 0.25 | 2 | 66.67 | 88.33 |
| 279 | 0.5 | Thermaval© Metallic Copper (Merck KGaA) | 0.25 | 2 | 66.67 | 88.33 |
| 280 | 0.01 | Iriodin© 325 (Merck KGaA) | 1 | 2 | 0.99 | 21.60 |
| 281 | 0.15 | Iriodin© 325 (Merck KGaA) | 0.5 | 2 | 23.08 | 89.21 |
| 282 | 0.3 | Iriodin© 325 (Merck KGaA) | 0.25 | 2 | 54.55 | 97.06 |
| 283 | 0.5 | Iriodin© 325 (Merck KGaA) | 0.05 | 2 | 90.91 | 99.64 |
| 284 | 0.01 | Iriodin© 325 (Merck KGaA) | 1 | 3 | 0.99 | 21.60 |
| 285 | 0.15 | Iriodin© 325 (Merck KGaA) | 0.5 | 3 | 23.08 | 89.21 |
| 286 | 0.3 | Iriodin© 325 (Merck KGaA) | 0.25 | 3 | 54.55 | 97.06 |
| 287 | 0.5 | Iriodin© 325 (Merck KGaA) | 0.05 | 3 | 90.91 | 99.64 |
| 288 | 0.01 | Iriodin© 325 (Merck KGaA) | 2 | 2 | 0.50 | 12.11 |
| 289 | 0.15 | Iriodin© 325 (Merck KGaA) | 1.5 | 2 | 9.09 | 73.37 |
| 290 | 0.3 | Iriodin© 325 (Merck KGaA) | 1 | 2 | 23.08 | 89.21 |
| 291 | 0.5 | Iriodin© 325 (Merck KGaA) | 0.5 | 2 | 50.00 | 96.50 |
| 292 | 0.01 | Iriodin© 325 (Merck KGaA) | 0.01 | 2 | 50.00 | 96.50 |
| 293 | 0.15 | Iriodin© 325 (Merck KGaA) | 3 | 2 | 4.76 | 57.94 |
| 294 | 0.3 | Iriodin© 325 (Merck KGaA) | 1.2 | 2 | 20.00 | 87.32 |
| 295 | 0.5 | Iriodin© 325 (Merck KGaA) | 0.7 | 2 | 41.67 | 95.16 |
| 296 | 4.5 | Iriodin© 325 (Merck KGaA) | 0.5 | 2 | 90.00 | 99.60 |
| 297 | 0.5 | Iriodin© 325 (Merck KGaA) | 0.25 | 2 | 66.67 | 98.22 |
| 298 | 4.9 | Iriodin© 325 (Merck KGaA) | 0.1 | 2 | 98.00 | 99.93 |

**Table 2**

| **Trade name** | **Manufacturer** | **Substrate** | **Coating** | **Particle size [µm]** |
|---|---|---|---|---|
| Xirallic© Crystal Silver | Merck KGaA | Al₂O₃ | TiO₂ | 5 - 35 |
| Iriodin© 103 | Merck KGaA | Natural mica | TiO₂ | 10 - 60 |
| Iriodin© 305 | Merck KGaA | Natural mica | Fe₂O₃ and TiO₂ | 10 - 60 |
| Iriodin© 4504 Lava Red | Merck KGaA | SiO₂ | Fe₂O₃ | 5 - 50 |
| Iriodin© 9219 | Merck KGaA | Natural mica | TiO₂ | 10 - 60 |
| Iriodin© 9444 | Merck KGaA | Natural mica | Cr₂O₃ | 5 - 40 |
| Iriodin© 9504 | Merck KGaA | Natural mica | Fe₂O₃ | 10 - 60 |
| Xirallic© F60-50 | Merck KGaA | Al₂O₃ | Fe₂O₃ | 5 - 35 |
| Xirallic© F60-51 | Merck KGaA | Al₂O₃ | Fe₂O₃ | 5 - 35 |
| Pyrisma© M40-58 | Merck KGaA | Natural mica | Fe₂O₃ and TiO₂ | 5 - 40 |
| SynCrystal© Silver | Eckart GmbH | Synthetic mica | TiO₂ | 10 - 50 |
| SYMIC© B001 Silver | Eckart GmbH | Synthetic mica | TiO₂ | 5 - 25 |
| SYMIC© C001 Silver | Eckart GmbH | Synthetic mica | TiO₂ | 10 -40 |
| SYMIC© C604 Silver | Eckart GmbH | Synthetic mica | TiO₂ | 10 -40 |
| SYMIC© OEM X-fine Silver | Eckart GmbH | Synthetic mica | TiO₂ | 3 - 15 |
| SYMIC© C393 Gold | Eckart GmbH | Synthetic mica | Fe₂O₃ and TiO₂ | 10 - 40 |
| SYMIC© C522 Copper Earth Shade | Eckart GmbH | Synthetic mica | Fe₂O₃ | 10 - 40 |
| SYMIC© C542 Fire Red Earth Shade | Eckart GmbH | Synthetic mica | Fe₂O₃ | 10 - 40 |
| SYMIC© OEM Medium Space Gold | Eckart GmbH | Synthetic mica | Fe₂O₃ and TiO₂ | 12 - 38 |
| Magnapearl© 1000 | BASF AG | Natural mica | TiO₂ | 6 - 48 |
| Magnapearl© 2000 | BASF AG | Natural mica | TiO₂ | 5 - 25 |
| Magnapearl© 3100 | BASF AG | Natural mica | TiO₂ | 2 - 10 |
| Lumina© Brass 9232D | BASF AG | Natural mica | Fe₂O₃ and TiO₂ | 10 - 48 |
| Lumina© Copper 9350D | BASF AG | Natural mica | Fe₂O₃ | 8 - 48 |
| Lumina© Exterior Gold 2303D | BASF AG | Natural mica | TiO₂ | 8 - 48 |
| Lumina© Russet 9450D | BASF AG | Natural mica | Fe₂O₃ | 8 - 48 |
| Lumina© Royal Copper | BASF AG | Natural mica | TiO₂ | 10 - 34 |
| Lumina© Royal Magenta | BASF AG | Natural mica | TiO₂ | 10 - 34 |
| Lumina© Royal Blue | BASF AG | Natural mica | TiO₂ | 10 - 34 |
| Exterior Polar White KC9119-SW | Fujian Kuncai Fine Chemicals Co., Ltd. | Natural mica | TiO₂ | 5 - 25 |
| Exterior Sterling White KC9103-SW | Fujian Kuncai Fine Chemicals Co., Ltd. | Natural mica | TiO₂ | 10 - 45 |
| Exterior Fine Gold Satin KC9201-SW | Fujian Kuncai Fine Chemicals Co., Ltd. | Natural mica | TiO₂ | 5 - 25 |
| Exterior Platinum Pearl KC9205-SW | Fujian Kuncai Fine Chemicals Co., Ltd. | Natural mica | TiO₂ | 10 - 45 |
| Exterior Royal Gold KC9303-SW | Fujian Kuncai Fine Chemicals Co., Ltd. | Natural mica | Fe₂O₃ and TiO₂ | 10 - 45 |
| Exterior Royal Gold Satin KC9323-SW | Fujian Kuncai Fine Chemicals Co., Ltd. | Natural mica | Fe₂O₃ and TiO₂ | 5 - 25 |
| Exterior Bright Gold KC9307-SW | Fujian Kuncai Fine Chemicals Co., Ltd. | Natural mica | Fe₂O₃ and TiO₂ | 10 - 60 |
| Exterior Brown KC9502-SW | Fujian Kuncai Fine Chemicals Co., Ltd. | Natural mica | Fe₂O₃ | 8 - 45 |
| Exterior Wine Red KC9504-SW | Fujian Kuncai Fine Chemicals Co., Ltd. | Natural mica | Fe₂O₃ | 8 - 45 |
| Exterior Ruby KC9508-SW | Fujian Kuncai Fine Chemicals Co., Ltd. | Natural mica | Fe₂O₃ | 8 - 45 |
| ADAMAS© A-100D | CQV Co., Ltd. | Al₂O₃ | TiO₂ | 3 - 30 |
| ADAMAS© A-901 K Splendor White | CQV Co., Ltd. | Al₂O₃ | TiO₂ | 5 - 30 |
| ADAMAS© A-901 S Dazzling White | CQV Co., Ltd. | Al₂O₃ | TiO₂ | 9 - 45 |
| ADAMAS© A-901 K Splendor Gold | CQV Co., Ltd. | Al₂O₃ | TiO₂ | 5 - 30 |
| ADAMAS© A-701 S Dazzling Gold | CQV Co., Ltd. | Al₂O₃ | TiO₂ | 9 - 45 |
| ADAMAS© A-741 S Dazzling Red | CQV Co., Ltd. | Al₂O₃ | TiO₂ | 9 - 45 |
| ADAMAS© A-781 K Splendor Blue | CQV Co., Ltd. | Al₂O₃ | TiO₂ | 5 - 30 |
| ADAMAS© A-781 S Dazzling Blue | CQV Co., Ltd. | Al₂O₃ | TiO₂ | 9 - 45 |
| ADAMAS© A-620S Dazzling Bronze | CQV Co., Ltd. | Al₂O₃ | Fe₂O₃ | 9 - 45 |
| ADAMAS© A-640S Dazzling Copper | CQV Co., Ltd. | Al₂O₃ | Fe₂O₃ | 9 - 45 |
| ADAMAS© A-660S Dazzling Russet | CQV Co., Ltd. | Al₂O₃ | Fe₂O₃ | 9 - 45 |
| CHAOS© C-901 M Rutile Ultra Silk | CQV Co., Ltd. | Synthetic mica | TiO₂ | 3 - 17 |
| CHAOS© C-901 D Rutile Fine White | CQV Co., Ltd. | Synthetic mica | TiO₂ | 5 - 25 |
| CHAOS© C-900D Fine White | CQV Co., Ltd. | Synthetic mica | TiO₂ | 5 - 25 |
| CHAOS© C-907K Sky White | CQV Co., Ltd. | Synthetic mica | TiO₂ | 5 - 35 |
| CHAOS© C-901 K Splendor White | CQV Co., Ltd. | Synthetic mica | TiO₂ | 5 - 35 |
| CHAOS© C-901 S Rutile Dazzling Standard | CQV Co., Ltd. | Synthetic mica | TiO₂ | 9 - 45 |
| CHAOS© C-900S Dazzling Standard | CQV Co., Ltd. | Synthetic mica | TiO₂ | 9 - 45 |
| CHAOS© C-902S Super White | CQV Co., Ltd. | Synthetic mica | TiO₂ | 9 - 45 |
| CHAOS© C-109S Super Pearl | CQV Co., Ltd. | Synthetic mica | TiO₂ | 9 - 41 |
| CHAOS© C-109B Shimmering White | CQV Co., Ltd. | Synthetic mica | TiO₂ | 13 - 60 |
| CHAOS© C-901 E Glitter Pearl | CQV Co., Ltd. | Synthetic mica | TiO₂ | 17 - 100 |
| FERRIUS© F-620K Splendor Bronze | CQV Co., Ltd. | Synthetic mica | Fe₂O₃ | 5 - 35 |
| FERRIUS© F-630K Splendor Orange | CQV Co., Ltd. | Synthetic mica | Fe₂O₃ | 5-35 |
| FERRIUS© F-640K Splendor Copper | CQV Co., Ltd. | Synthetic mica | Fe₂O₃ | 5-35 |
| FERRIUS© F-660K Splendor Russet | CQV Co., Ltd. | Synthetic mica | Fe₂O₃ | 5 - 35 |
| FERRIUS© F-620P Crystal Bronze | CQV Co., Ltd. | Synthetic mica | Fe₂O₃ | 25 - 150 |
| FERRIUS© F-630P Crystal Orange | CQV Co., Ltd. | Synthetic mica | Fe₂O₃ | 25 - 150 |
| FERRIUS© F-640P Crystal Copper | CQV Co., Ltd. | Synthetic mica | Fe₂O₃ | 25 - 150 |
| FERRIUS© F-660P Crystal Russet | CQV Co., Ltd. | Synthetic mica | Fe₂O₃ | 25 - 150 |
| Magchrom© N-5001 C Natural Corona Gold | CQV Co., Ltd. | Nat. mica | TiO₂ | 7 - 30 |
| Magchrom© N-5001S Natural Dazzling Gold | CQV Co., Ltd. | Nat. mica | TiO₂ | 9 - 45 |
| Magchrom© S-7801 C Corona Blue | CQV Co., Ltd. | Synthetic mica | TiO₂ | 7 - 27 |

## Claims

1. A process for the preparation of glazed articles comprising the following steps:
(a) preparing a ceramic colour by mixing at least one effect pigment based on a flake-form substrates and/or uncoated flake-form substrates with a refractive index R.I. > 1.5, at least one silicon comprising polymer, optionally a solvent, optionally a binder, optionally an absorptive ceramic pigment and optionally at least one additive,
(b) printing or coating the ceramic colour obtained in step (a) on a ceramic or metallic body,
(c) drying the ceramic or metallic body obtained in step (b),
(d) firing the ceramic or metallic body obtained in step (c) at a temperature in the range of 450°C-1300°C.

2. Process according to claim 1, **characterised in that** in step (d) the ceramic body is fired at a temperature in the range of 700 - 1300°C or the metallic body is fired at a temperature in the range of 450 - 950°C.

3. Process according to one or more of claims 1 to 2, **characterised in that** the proportion of effect pigment in the ceramic colour is at least 0.1% by weight based on the silicon comprising polymer.

4. Process according to one or more of claims 1 to 3, **characterised in that** the effect pigments are based on flake-form substrates selected from the group consisting of synthetic mica flakes, natural mica flakes, glass flakes, Al₂O₃ flakes, SiO₂ flakes, Fe₂O₃ flakes, B₄C flakes, TiO₂ flakes, SiC flakes, SiₓN_{y}C_{z} flakes with x = 0.5-1.0; y = 0.25-0.5; z = 0.25-0.5, BN flakes, and graphite flakes.

5. Process according to one or more of claims 1 to 4, **characterised in that** the flake-form substrates of the effect pigments are covered with one or more layers of metal oxide(s), metal sulfides, rare-earth metal oxides and/or metal(s) or mixtures thereof.

6. Process according to one or more of claims 1 to 5, **characterised in that** the flake-form substrates of the effect pigments are covered on the surface with one or more layers selected from the group TiO₂, Fe₂O₃, ZrO₂, SnO₂, TiO₂/Fe₂O₃, Fe₂TiO₅, FeTiO₃, FeOOH, Fe₃O₄, Cr₂O₃ and TiOₓ, where x = 1.50 - 1.95.

7. Process according to one or more of Claims 1 to 6, **characterised in that** the flake-form substrates have a particle thickness of 0.05 - 5.0 µm.

8. Process according to one or more of Claims 1 to 7, **characterised in that** the ceramic colour comprises as silicon comprising polymer at least one polysilazane, at least one polysiloxane and/or at least one polysilsesquioxanes.

9. Process according to one or more of Claims 1 to 8, **characterised in that** the ceramic colour comprises a printing oil.

10. Process according to one or more of Claims 1 to 9, **characterised in that** the effect pigments are selected from the following group of pigments:
substrate flake + TiO₂
substrate flake + Fe₂O₃
substrate flake + Fe₃O₄
substrate flake + TiO₂/Fe₂O₃
substrate flake + FeTiO₃
substrate flake + Fe₂TiO₅
substrate flake + ZrO₂
substrate flake + ZnO
substrate flake + SnO₂
substrate flake + Cr₂O₃
substrate flake + Ce₂O₃
substrate flake + TiOₓ (reduced), where x = 1.50 - 1.95
substrate flake + TiO₂ + Fe₂O₃
substrate flake + TiO₂ + Fe₃O₄
substrate flake + Fe₂O₃ + TiO₂
substrate flake + TiO₂ + SiO₂ + TiO₂
substrate flake + TiO₂ + SnO₂ + TiO₂
substrate flake + TiO₂ + Al₂O₃ + TiO₂
substrate flake + Fe₂O₃ + SiO₂ + TiO₂
substrate flake + TiO₂/Fe₂O₃ + SiO₂ + TiO₂
substrate flake + TiO₂/Fe₂O₃ + SiO₂ + TiO₂/Fe₂O₃
substrate flake + TiO₂/Fe₂O₃ + SiO₂ + TiO₂ + TiO₂/Fe₂O₃
substrate flake + TiO₂ + SiO₂ + TiO₂/Fe₂O₃
substrate flake + TiO₂ + SiO₂
substrate flake + TiO₂ + Al₂O₃
substrate flake + TiO₂ + MgO x SiO₂ + TiO₂
substrate flake + Fe₂O₃ + MgO x SiO₂ + TiO₂
substrate flake + TiO₂/Fe₂O₃ + MgO x SiO₂ + TiO₂
substrate flake + TiO₂/Fe₂O₃ + MgO x SiO₂ + TiO₂/Fe₂O₃
substrate flake + TiO₂/Fe₂O₃ + MgO x SiO₂ + TiO₂ + TiO₂/Fe₂O₃
substrate flake + TiO₂ + MgO x SiO₂ + TiO₂/Fe₂O₃
substrate flake + SnO₂ + TiO₂ + SiO₂ + SnO₂ + TiO₂
substrate flake + SnO₂ + TiO₂ + SnO₂ + TiO₂
substrate flake + SnO₂ + TiO₂ + Fe₂O₃ + SiO₂ + SnO₂ + TiO₂ + Fe₂O₃
substrate flake + Fe₂O₃ + SnO₂ + TiO₂
substrate flake + Fe₂O₃ + SnO₂ + Fe₂O₃
substrate flake + TiO₂ + SnO₂ + TiO₂
substrate flake + TiO₂/Fe₂O₃ + SnO₂ + TiO₂
substrate flake + TiO₂/Fe₂O₃ + SnO₂ + TiO₂/Fe₂O₃
substrate flake + SnO₂ + TiO₂ + Fe₂O₃ + SnO₂ + TiO₂ + Fe₂O₃
substrate flake + Fe₂TiO₅ + SnO₂ + Fe₂TiO₅
substrate flake + Fe₂TiO₅ + SiO₂ + Fe₂TiO₅

11. Process according to one or more of Claims 1 to 10, **characterised in that** the effect pigments on the substrate flake have a first low-refractive-index layer (= LRL) comprising Al₂O₃, SiO₂, zirconium silicate ZrSiO₄, mullite 3Al₂O₃ x 2SiO₂ or 2Al₂O₃ x SiO₂ (sintered or fused mullite) or alkaline-earth metal silicate (MSiO₃, where M = Mg²⁺, Ca²⁺, Sr²⁺ or Ba²⁺, or M₂Si₃O₈, where M = Mg²⁺, Ca²⁺, Sr²⁺ or Ba²⁺) and are selected from the following group of pigments:
substrate flake + LRL + TiO₂
substrate flake + LRL + Fe₂O₃
substrate flake + LRL + Fe₃O₄
substrate flake + LRL + TiO₂/Fe₂O₃
substrate flake + LRL + FeTiO₃
substrate flake + LRL + Fe₂TiO₅
substrate flake + LRL + ZrO₂
substrate flake + LRL + ZnO
substrate flake + LRL + SnO₂
substrate flake + LRL + Cr₂O₃
substrate flake + LRL + Ce₂O₃
substrate flake + LRL + TiOₓ (reduced), where x = 1.50 - 1.95
substrate flake + LRL + TiO₂ + Fe₂O₃
substrate flake + LRL + TiO₂ + Fe₃O₄
substrate flake + LRL + Fe₂O₃ + TiO₂
substrate flake + LRL + TiO₂ + SiO₂ + TiO₂
substrate flake + LRL + TiO₂ + SnO₂ + TiO₂
substrate flake + LRL + TiO₂ + Al₂O₃ + TiO₂
substrate flake + LRL + Fe₂O₃ + SiO₂ + TiO₂
substrate flake + LRL + TiO₂/Fe₂O₃ + SiO₂ + TiO₂
substrate flake + LRL + TiO₂/Fe₂O₃ + SiO₂ + TiO₂/Fe₂O₃ substrate flake + LRL + TiO₂/Fe₂O₃ + SiO₂ + TiO₂ + TiO₂/Fe₂O₃
substrate flake + LRL + TiO₂ + SiO₂ + TiO₂/Fe₂O₃
substrate flake + LRL + TiO₂ + SiO₂
substrate flake + LRL + TiO₂ + Al₂O₃
substrate flake + LRL + TiO₂ + MgO x SiO₂ + TiO₂
substrate flake + LRL + Fe₂O₃ + MgO x SiO₂ + TiO₂
substrate flake + LRL + TiO₂/Fe₂O₃ + MgO x SiO₂ + TiO₂
substrate flake + LRL + TiO₂/Fe₂O₃ + MgO x SiO₂ + TiO₂/Fe₂O₃
substrate flake + LRL + TiO₂/Fe₂O₃ + MgO x SiO₂ + TiO₂ + TiO₂/Fe₂O₃
substrate flake + LRL + TiO₂ + MgO x SiO₂ + TiO₂/Fe₂O₃
substrate flake + LRL + SnO₂ + TiO₂ + SiO₂ + SnO₂ + TiO₂
substrate flake + LRL + SnO₂ + TiO₂ + SnO₂ + TiO₂
substrate flake + LRL + SnO₂ + TiO₂ + Fe₂O₃ + SiO₂ + SnO₂ + TiO₂ + Fe₂O₃
substrate flake + LRL + Fe₂O₃ + SnO₂ + TiO₂
substrate flake + LRL + Fe₂O₃ + SnO₂ + Fe₂O₃
substrate flake + LRL + TiO₂ + SnO₂ + TiO₂
substrate flake + LRL + TiO₂/Fe₂O₃ + SnO₂ + TiO₂
substrate flake + LRL + TiO₂/Fe₂O₃ + SnO₂ + TiO₂/Fe₂O₃
substrate flake + LRL + SnO₂ + TiO₂ + Fe₂O₃ + SnO₂ + TiO₂ + Fe₂O₃
substrate flake + LRL + Fe₂TiO₅ + SnO₂ + Fe₂TiO₅
substrate flake + LRL + Fe₂TiO₅ + SiO₂ + Fe₂TiO₅

12. A ceramic colour comprising at least one silicon comprising polymer and at least one effect pigment based on flake-form substrates selected from the group consisting of Al₂O₃ flake, SiC flakes, B₄C flakes, BN flakes, graphite flakes, TiO₂ flakes, and Fe₂O₃ flakes and/or at least one uncoated flake-form substrate with a refractive index R.I. > 1,5 selected from the group consisting of Al₂O₃ flake, SiC flakes, SiₓN_{y}C_{z} flakes with x = 0.5-1.0; y = 0.25-0.5; z = 0.25-0.5, B₄C flakes, BN flakes, graphite flakes, TiO₂ flakes, and Fe₂O₃ flakes.

13. Ceramic colour according to claim 12, **characterised in that** the proportion of effect pigment in the ceramic colour is at least 0.1% by weight based on the silicon comprising polymer.

14. Ceramic colour according to one or more of Claims 12 to 13, **characterised in that** it comprises as silicon comprising polymer at least one polysilazane, at least one polysiloxane and/or at least one polysilsesquioxane.

15. Use of the ceramic colour according to one or more of Claims 12 to 14 for unfired fired bricks, unfired or fired earthenware, ceramicware, ceramic glazes, decorative tiles, porcelain glazes or metallic decoration like enamel.

16. Formulations comprising the ceramic colour according to one or more of Claims 12 to 14.

17. Use of a ceramic colour according to one or more of claims 12 to 14, for the manufacture of decorative elements on articles exhibiting an outer surface of porcelain, china, bone china, ceramic, glass or enamel.
